(19) Europäisches Patentamt
European Patent Office
Office européen des brevets

(11) **EP 1 652 146 B1**

(12) **EUROPEAN PATENT SPECIFICATION**

(45) Date of publication and mention
of the grant of the patent:
**10.10.2007 Bulletin 2007/41**

(51) Int Cl.:
*G06T 9/00* (2006.01)

(86) International application number:
**PCT/TR2003/000059**

(21) Application number: **03817567.5**

(22) Date of filing: **21.07.2003**

(87) International publication number:
**WO 2005/008595 (27.01.2005 Gazette 2005/04)**

(54) **IMPLEMENTATION OF THE JPEG2000 COMPRESSION ALGORITHM IN HARDWARE**

IMPLEMENTIERUNG DES KOMPRIMIERUNGSALGORITHMUS JPEG2000 IN HARDWARE

IMPLEMENTATION DE L'ALGORITHME DE COMPRESSION JPEG2000 DANS UN MATERIEL

(84) Designated Contracting States:
**FR GB TR**

(43) Date of publication of application:
**03.05.2006 Bulletin 2006/18**

(73) Proprietor: **Tubitak-Bilten ( Turkiye Bilimsel Ve Teknik**
**Arastirma Kurumu-Bilgi Teknolojileri Ve Elektronik**
**Arastirma Enstitusu)**
**06531 Ankara (TR)**

(72) Inventors:
• **ISMAILOGLU, Neslin A,**
**06531 ANKARA (TR)**
• **TEKMEN, Cagatay Y,**
**06531 ANKARA (TR)**
• **KOLCAK, Taner**
**06531 ANKARA (TR)**
• **BENDERLI, Oguz**
**06531 ANKARA (TR)**
• **KORKMAZ, Ilgaz**
**06531 ANKARA (TR)**
• **YESIL, Soner**
**06531 ANKARA (TR)**
• **SEVER, Refik**
**06531 ANKARA (TR)**
• **SUNAY, Hacer**
**06531 ANKARA (TR)**

(74) Representative: **Cayli, Hülya**
**Paragon Consultancy Inc.**
**Koza Sokak No: 60/6**
**GOP**
**06700 Ankara (TR)**

(56) References cited:
EP-A- 1 233 624          WO-A-00/39952
US-A- 5 966 465          US-A- 6 141 453
US-A1- 2002 084 921

• SKODRAS A ET AL: "THE JPEG 2000 STILL IMAGE COMPRESSION STANDARD" IEEE SIGNAL PROCESSING MAGAZINE, IEEE INC. NEW YORK, US, vol. 18, no. 5, September 2001 (2001-09), pages 36-58, XP001059421 ISSN: 1053-5888
• CHRYSAFIS C ET AL: "Line based reduced memory, wavelet image compression" DATA COMPRESSION CONFERENCE, 1998. DCC '98. PROCEEDINGS SNOWBIRD, UT, USA 30 MARCH-1 APRIL 1998, LOS ALAMITOS, CA, USA,IEEE COMPUT. SOC, US, 30 March 1998 (1998-03-30), pages 398-407, XP010276575 ISBN: 0-8186-8406-2
• DIEGO SANTA CRUZ ET AL: "THE JPEG 2000 IMAGE CODING STANDARD A POWERFUL ALGORITHM AND DATA FORMAT" DR. DOBB'S JOURNAL, M&T PUBL., REDWOOD CITY, CA,, US, vol. 26, no. 4, April 2001 (2001-04), pages 46-54, XP001061383 ISSN: 1044-789X
• LAWRENCE N A ET AL: "COMBINED IMAGE DECOMPRESSION AND DISPLAY DRIVING USING WAVELET-BASED MULTIPLE LINE ADDRESSING" 2001 SID INTERNATIONAL SYMPOSIUM DIGEST OF TECHNICAL PAPERS. SAN JOSE, CA, JUNE 5 - 7, 2001, SID INTERNATIONAL SYMPOSIUM DIGEST OF TECHNICAL PAPERS, SAN JOSE, CA: SID, US, vol. 32, June 2001 (2001-06), pages 98-101, XP001054070

## Description

### Field of the Invention

This invention relates to the implementation of the JPEG2000 image compression algorithm in hardware.

### Background of the Invention

Digital imaging, whether it be professional or recreational is a common reality today, allowing the capture of images using solid-state devices and image sensor devices instead of traditional film. The basic functioning of a digital camera is by means of recording the incident light through analog-to-digital conversion, thereby creating a digital representation of the image. Digital images have numerous advantages over traditional film images, such as ease of storage, access, transportation and manipulation.

For a digital image to be comparable in quality to an analog image generated through traditional film photography, a considerable amount of digital data should be stored. At 1200 dpi (dots per inch), a 5" by 4" image would translate into a 6000 pixel by 4800 pixel digital image, or 28.8 million pixels total. If each pixel is represented by 24 bits (8 bits for each spectral channel: Red, Green and Blue) this means storing roughly 9.1 Mbytes of digital data. Due to this large storage requirement, in digital imaging equipment, some compression algorithm (such as JPEG) is generally applied prior to storage.

In such image compression applications resolution and quality scalability are essential. JPEG2000 is an upcoming image compression standard published by the committee of JPEG, Joint Photographic Experts Group to serve the needs of current and future applications that uses still image coding. The committee's first published standard JPEG is a simple and efficient discrete cosine transform (DCT) based lossy compression algorithm that uses Huffman Coding and is restricted to 8 bits/pixel. Though various extensions has appeared to JPEG to provide broader applicability and lossless compression, these extensions introduced only limited capability and faced with the intellectual copyright properties. Since 1996, various image compression algorithms were proposed and evaluated for the new image compression standard, and the one that was published at the end of 2000 by ISO (ISO 15444 ITU-T Recommendation T.800) has been adopted as the new comprehensive still image compression standard, JPEG2000.

The JPEG2000 algorithm does not only provide higher compression efficiency but also provides a new rich feature set for image representation that is supported in single compressed stream. The shortcomings of the old JPEG standard are eliminated by the following features of JPEG2000 algorithm:

- Higher compression efficiency
- Lossy and lossless compression
- Multiple resolution representation of still images
- Embedded bit stream (progressive decoding and SNR scalability)
- Tiling
- Region of Interest (ROI) coding
- Error resilience
- Random compressed code stream access and processing
- More flexible file format

The JPEG2000 algorithm uses Discrete Wavelet Transform (DWT) instead of DCT (Discrete Cosine Transform, used in the old JPEG standard). DWT inherently provides multiresolutional representation of image, embedded coding with the utilization of quantization, and allows lossy and lossless compression by integer DWT filters. The DWT coefficients are coded by means of Entropy Coding (EC), where the binary bit planes are encoded with a context based, adaptive, probability renormalization driven arithmetic encoder known as MQ coder instead of Huffman coder.

Both DWT and EC operations are computationally, and as well as memory, intensive and have historically been implemented in software. Even though inherent parallelization is present in the EC algorithm, the parallel paths are complex, data dependent, and are defined only at run time. Furthermore, since the JPEG2000 computational kernel will typically be part of digital cameras, scanners, printers, wireless devices with multimedia capabilities, specialized imaging applications for remote sensing (satellite imaging), etc., it is crucial that the kernel be area, time, and power efficient. In most cases real-time JPEG2000 compression would be preferred, however an efficient implementation has not been invented until now.

It has been previously proposed that the design of hardware implementing the JPEG2000 algorithm would require storing of the entire image stream on local memory prior to processing. This not only limits the size of an image that can be processed to the size of the local memory present on such hardware, but also limits the number of multiple components that can be processed in parallel. Furthermore, previous JPEG2000 implementations process the image data off-line, i.e., they are incapable of processing continuous, high-bandwidth, high-resolution image streams in real-time, without loss of image data. The term real-time in this context means that processing of a multi-component image should be completed before a second image is received.

Document "The JPEG 2000 still image compression standard", Skodras et Al., IEEE Signal Processing Magazine, September 2001, describes the JPEG2000 compression standard and an apparatus implementing it that uses tiling and row-based processing and in which the lines to be filterd by the FIR-filters are subject to symmetric extensions.

## Summary of the Invention

The invention is defined by the appended claims.

An aim of this invention is to provide a method and an apparatus for implementing the JPEG2000 algorithm in real-time, using a minimum amount of local data storage. In particular, the aim is to process (compress) the output of digital imaging sensors (such as CCDs (Charge Coupled Device)) in real-time, as the image data is output from the sensors, while storing only a small portion of the incoming image stream at any given time.

Another aim of the invention is to provide a convenient method of scalability with respect to the number of multi-component images that are processed in parallel.

Furthermore, it is desired that the invention provide a format for the compressed image data, suitable for storage and allowing for different levels of compression and image quality (for both lossy and lossless compression).

In arriving at this invention, the inventors have realized that the data output from digital imaging sensors is in serial row-based fashion. Instead of waiting for the entire image to be accumulated in local memory and then starting the compression process, the incoming row-based image data is first rearranged into small image tiles (by means of a local buffer) and processing begins as soon as an image tile is accumulated. The processing of an image tile is completed exactly in the time it takes for another tile to accumulate in the local buffer.

Therefore, from a first perspective, the invention provides for a means to significantly reduce the local memory storage requirements of the JPEG2000 compression of high-resolution multi- component images.

The inventors have recognized that the highly computationally intensive task of compressing an image tile in the above mentioned time frame can only be achieved if the computation of the DWT coefficients can be interleaved by employing separate cascaded filters for each level of sub-band decomposition. Computation in said interleaved fashion results in an irregular output of the DWT coefficient in short high-rate bursts. The DWT coefficients are therefore buffered and properly rearranged as to be suitable for Entropy Coding. Therefore, from a second perspective, the invention allows for the real-time compression of multi-component images with only an introduced latency equal to the time it takes for one tile to accumulate in the local buffer, which is independent of the image size.

The inventors have also recognized that the number of multi-component images or the number of multiple components belonging to a specific image processed in real-time can only be increased by employing parallel pipelines of compression, comprised of separate DWT filters and EC kernels for each individual image component. Therefore, from a third perspective, the invention allows for scaling to a larger number of images (or multiple components) processed in real-time by employing a larger number of parallel compression pipelines.

Furthermore, the invention allows for the size and quality of the compressed image to be controlled by excluding specific sub-band information or by applying quantization to the DWT coefficients prior to EC. The information pertaining to the excluded sub-bands and any quantization employed is conveyed through a quality measure for each individual image component. The compressed image data must therefore be formatted before storage, for proper reconstruction of the images from the compressed data. The JPEG2000 standard provides for specific markers for general formatting of the compressed data. Additional markers are needed, however, if separate compression quality measures are to be applied to individual image streams. These quality measures are inserted into the compressed image stream by means of specific markers prior to storage. Therefore, from a fourth perspective, the invention provides for a means of controlling the compression quality and size of the compressed image stream using quality measures for each individual image stream defined by specific markers inserted into the compressed image stream.

The method of the invention and the embodiments of the invention will now described in detail.

## Brief Description of the Drawings

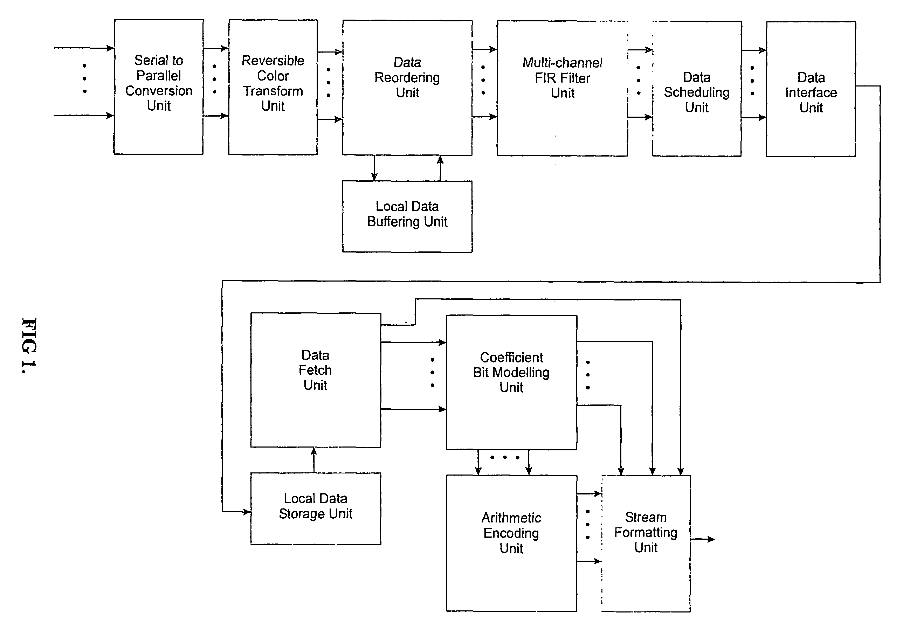

**FIG 1.** Block diagram of the invention

**FIG. 2:** Reception format for the image data in four quadrants. The image is received in row-major order, simultaneously from M sources. Shaded area at both sides are the black pixels and are discarded.

**FIG 3**. Tiling applied to an image frame.

**FIG 4.** Block diagram of discrete wavelet transform used in JPEG2000.

**FIG 5.** Block diagram of lifting steps applied to 5/3 filter.

**FIG 6**. Block diagram of Multi-channel FIR filter Unit

**FIG 7.** Elements of horizontal filter.

**FIG 8.** Operation of horizontal filter.

**FIG 9**. Elements of vertical filter.

**FIG 10.** Operation of vertical filter.

**FIG 11.** Output timing diagram of three cascaded 2-D filtering units. The beginning and ending is seen on a single tile.

**FIG 12.** Output timing diagram of the joint of a two consecutive tiles. Boxes with different colors belong to different tiles.

**FIG 13.** Elements of vertical filter of type B.

**FIG 14.** New timing diagram for three levels when first two levels contain filter of type B and the last one contain vertical filter of type A.

**FIG 15. - FIG. 31.** Pseudo JPEG2000 Algorithm flow diagrams implemented in Entropy Encoding Unit (3 level wavelet decomposition and 4 band image assumed)

**FIG 32.** Memory organization of Entropy Encoding Unit

**FIG. 33.** New stream format.

## DETAILED DESCRIPTION OF THE INVENTION

The apparatus according to the present invention for implementing the JPEG2000 algorithm in real-time, using a minimum amount of local data storage comprises a discrete wavelet transformation unit, a local data buffering unit, an entropy coding unit, a local data storage unit, a communication controller unit, an operation controller unit.

The Discrete Wavelength Transform unit of the apparatus according to the present invention comprises a serial to parallel conversion unit, DC-level shift & color transform unit, a data reordering unit, a local data buffering unit, multi-channel FIR filter unit, data scheduling unit, data interface unit.

In the Serial-to-Parallel Conversion Unit incoming serial data is sampled and converted to parallel. *Serial-to-parallel Conversion Unit* receives data from $M$ cameras simultaneously. Each camera sends an image $\bar{I}_m$ of n x $(n + 2\beta)$ unsigned $B$-bit pixels in row major order in four quadrants as shown in figure 2. At both sides of the image (shaded areas in the figure) are stripes which are $\beta$ pixels wide and which contain no information but black pixels (zeros). Therefore data from these parts should be ignored during acquisition.

This unit is properly suited in order to handle the physical layer existing between the cameras and the *DWT Unit.* It receives the serial bit stream, discards the black pixels and sends the images $I_m(x,y)$ $(m= 0...M-1)$ of size n x n to the *DC-Level Shift & Color Transform Unit* in parallel.

DC-Level Shift & Color Transform Unit implements the DC-level shift and Color Transform operations defined in the JPEG2000 standard.

Pixels from each camera are initially B bit unsigned. B is the bit depth of the pixels As the JPEG2000 standard suggests, $2^{B-1}$ should be subtracted from the pixel values. This is done just as the pixels are received from the *Serial-to-parallel Conversion Unit.* After DC level shift, representation of the values become $B$-bits 2's complement (i.e. $-2^{B-1} \le I < 2^{B-1}$).

According to the JPEG2000 standard component transform is optional. However it is a known fact that the transformed components leads to better compression performance and shorter coding time than the RGB components, for this reason it is essential in our implementation. Reversible color transform employs a matrix operation on some components of the image (see equation 1). The transform requires at least 3 components. The rest are left unchanged. This transform should be performed before the *tiling*. This is because after the tiling only R-and-G or *B*-and-*I* components are available at the same time.

$$X_0(x,y) = \left\lfloor \frac{I_0(x,y) + 2I_1(x,y) + I_2(x,y)}{4} \right\rfloor \qquad (1.a)$$

$$X_1(x,y) = I_2(x,y) - I_1(x,y) \qquad (1.b)$$

$$X_2(x,y) = I_0(x,y) - I_1(x,y) \qquad (1.c)$$

Computation of the transform components and writing them to off-chip has a problem, which is the expansion of dynamic range in some components. Original components R $(I_0)$, G $(I_1)$, B $(I_2)$ and C$(I_3)$ are of B bits depth, but the new components $X_0$, $X_1$ and $X_2$ are of $B$, $B$+1 and $B$+1 bits depth respectively $(X_3$ is the same as $I_3)$. Storing $B$+1 bit values is usually not feasible for a low memory hardware since the excess bits may require extra words. Thus the expanded components should be either;

> i quantized: least significant bit should be omitted,
> or
> ii clamped: clamping the values to B bit range ($[-2^B, 2^{B-1}]$).

Computation of $X_1$ and $X_2$ involves subtraction of original components. Although dynamic range is increased one bit after subtraction theoretically, it actually reduces the dynamic range on correlated data such as images. Experiments show that clamping gives better results. So we apply clamping.

Buffering, reading back, tiling are done in *Data Reordering Unit.* This module also provides data and control signals asserting beginning and endings of image, tiles and lines to the filter. And also it is the responsible part for read/write assertions and address handling of the off-chip *Local Data Buffering Unit.*

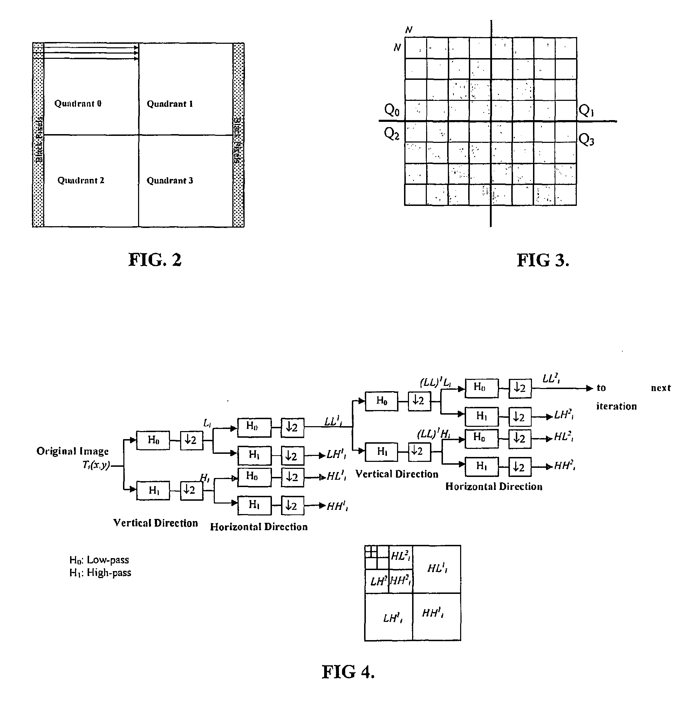

Tiling is a procedure in which the image is partitioned into smaller blocks called tiles. Throughout this document the whole image frame and tiles are assumed to be square and of size n x n and *N x N* respectively, where *N* is a divisor of *n* (See Figure 3).

Each frame $X_i$ is divided into tiles forming a tile matrix as shown in figure. The tile $X_i^{q,r,s}$, which is on the $r^{th}$ row and $s^{th}$ column of the $q^{th}$ quadrant of the tile matrix, is assigned a global-tile index G and is equal to either MSB or LSB portions of a *global-tile,* $T_G$. For a frame size of n and tile size of *N,* and with *M* components the case is as follows:

$$G = \frac{1}{2}(n/N)^2 q + nr/N + \frac{1}{2}Ms + \lfloor i/2 \rfloor \tag{2}$$

$$X_i^{q,r,s}(x, y) = T_G^{LSB}(x, y) \quad \text{for } i \equiv 0 (\mathrm{mod}\ 2) \tag{3}$$

$$X_i^{q,r,s}(x, y) = T_G^{MSB}(x, y) \quad \text{for } i \equiv 1 (\mathrm{mod}\ 2) \tag{4}$$

$T_G^{MSB}$ and $T_G^{LSB}$ are processed parallelly. The concatenation $T_G$ can be thought as a vectorized form of $T_G^{MSB}$ and $T_G^{LSB}$ consisting of 2B bits , such as :

$$\mathbf{T}_G \overset{\Delta}{=} \begin{pmatrix} T_G^{MSB} \\ \cdots\cdots \\ T_G^{LSB} \end{pmatrix} \tag{5}$$

Tiles are processed in the *global-tile order :* $\mathbf{T}_0,..., \mathbf{T}_i, \mathbf{T}_{i+1},... \mathbf{T}_{z-1}$, where Z is the number of global-tiles, and it is equal to :

$$Z = 2\left(\frac{n}{N}\right)^2 \tag{6}$$

Tiling is done in order to reduce internal memory requirements in the architecture.

The data received is first buffered in off-chip *Local Data Buffering unit* until sufficient part of image to begin tiling is received. Since the data is received quadrant by quadrant and in row-major order (i.e. the first row of the $0^{th}$ quadrant is received first then the second row and so on When the quadrant is finished, the first row of the next quadrant is received an so on..), *N* rows of a quadrant should be received before a tile is ready in *Local Data Buffering unit .*

Therefore the amount of data buffered before beginning computation (so the delay introduced due to buffering) in terms of pixels is:

$$S = \frac{1}{2}MNn \qquad\qquad (7)$$

where $M$ is the number of image components, n is the frame size and $N$ is the tile size.

Having received $S$ pixels, architecture begins to read the data tile by tile. After this time reading and writing is continued simultaneously until the whole image has been received. The pixels are read *global-tile* by *global-tile.* Within each tile the direction of reading is from top to bottom and from left to right (column-major order). After writing is finished, the last S pixels are read from the memory.

Pixels of To are sent to two parallel DWT filters which process $T_{GSB}LSB$ and $T_{GSB}MSB$ parallelly. Along with the data, image beginning/ending (frame), tile beginning/ending (tile), row beginning/ending (row), data valid (valid) signals are generated in *Data Reordering Unit* and are sent to the *Multi-channel FIR filter Unit.* Filter processes each tile's data independently.

The incoming data is stored in *Local Data Buffering Unit.* The amount of data Eqn. 7 which is required to be buffered is stored in this unit. While *Data Reordering Unit* reads back and sends to processing the data of size $S$, another piece of data of size $S$ is written simultaneously to *Local Data Buffering Unit.* Therefore the required size of this unit is *2S.*

Wavelet based image compression methods like JPEG2000 involve two dimensional wavelet analysis of the image components. One level of sub-band decomposition consists of low-pass and high-pass filtering of the image, once in vertical and then in horizontal direction. Further sub-band decomposition is possible by applying the same filtering to the sub-band $LL^{j-1}{}_i$ to obtain sub-bands $LL^j{}_i$, $LH^j{}_i$, $HL^j{}_i$, and $HH^j{}_i$. The superscript $j$ denotes the level, and $J$ denotes the number of sub-band decomposition levels. For generality input global-tile $T_i$ can be denoted as $LL^0{}_i$. And for simplicity, throughout this document $C^j{}_i$ stands for "any one" of the sub-bands whenever the case is valid for all sub-bands.

At each level of filtering the image is decomposed into sub-bands carrying course and detail information. The output of a horizontal high-pass filter carries details such as vertical edges, whereas output of low-pass filter contains the dc and the low frequency information. Figure 4 shows a typical tree-structured sub-band transformation.

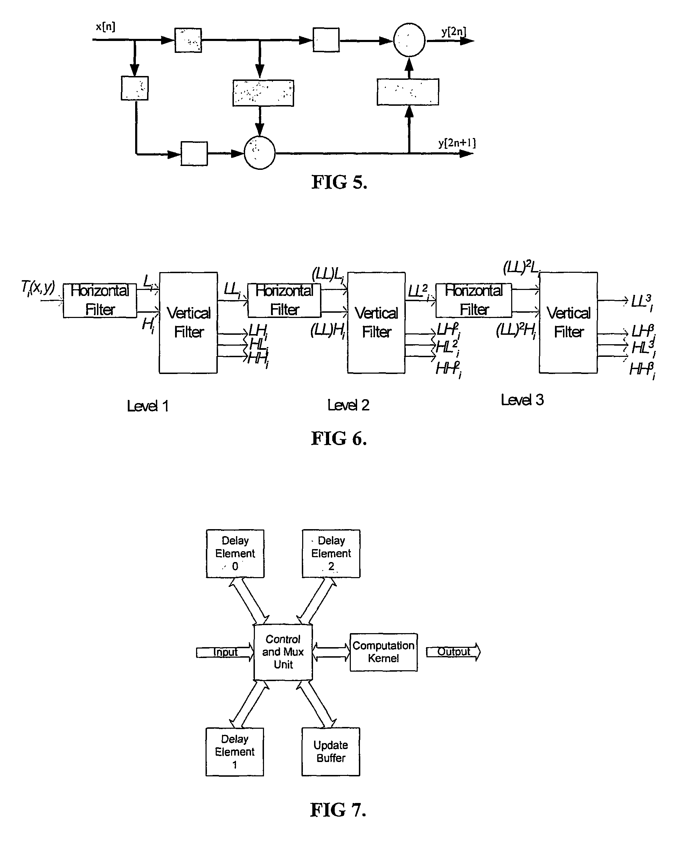

In order to reduce the memory requirements of the architecture, factorization of 5/3 filter into lifting steps is used in hardware implementation. Figure 5 shows the lifting implementation of the wavelet filter. Instead of using high-pass and low-pass filter pairs, a polyphase filter structure having predict and update steps is used.

Figure 6 shows the block diagram of the *Filter Unit.* Each level consists of a horizontal and a vertical filter. The control signals (tile) and (row) separates the incoming consecutive tiles and rows respectively, and (valid) signals indicate that the appeared data at the input is valid. (tile) and (row) are required for symmetric extension.

Except their directions of filtering, both the horizontal and the vertical filtering do the same computation. However the vertical one, in hardware implementations, has to store a few whole lines which it is currently processing. Vertical filters thus, occupy much more area than the horizontal filters.

Horizontal Filter Unit is repeated as identical in each level once. It filters the incoming data in horizontal direction applying lifting steps (Figure 5). (By horizontal direction it is mentioned that the filtering is done within a single line. Since what the filter receives as 'rows' from the sequencer are actually the columns of the tiles, this module handles 'vertical filtering' as far as the whole image is concerned.)

Horizontal filter operates on the pixels in a row of input sub-band. Horizontal filter at level j divides the input sub-band $(LL)^{j-1}{}_i$ which is of size $(N/2^{j-1})$ x $(N/2^{j-1})$ into $(LL)^{j-1}L_i$ and $(LL)^{j-1}H_i$ frames of size $(N/2^j)$ x $(N/2^{j-1})$.

JPEG2000 standard suggests applying symmetric extension at the line boundaries. So the filters should be aware of the line boundaries and process the data accordingly. Therefore the filters do not only consist of tapped delay lines but also include state control units to handle symmetric extension. Figure 7 shows the elements of *Horizontal Filter.*

Computation Kernel Unit is the computation core of the filters. It computes the weighted sums of its inputs needed for the 5/3 filter implementation. In lifting steps implementation (Figure D) input sequence x[n] is split into two channels x[2n] and x[2n-1]. These are the two instances of input sequence down-sampled by 2. The sequence x[2n] is called the even sample values and the latter is the odd sample values. $x_{ex1}[n]$ is the extended version of x[n] at both ends, which is obtained by reflections of the signal centered at the first and the last sample.

The odd sample values are first updated with a floored weighted sum of even sample values and then the even sample values are updated with a similar weighted sum of these new odd values. The sequence of computations for a non-causal implementation is as follows:

$$Y[2n+1] = X_{ext}[2n+1] - \left\lfloor \frac{X_{ext}[2n] + X_{ext}[2n+2]}{2} \right\rfloor \qquad (8.a)^{\cdot}$$

$$Y[2n] = X_{ext}[2n] + \left\lfloor \frac{Y[2n-1] + Y[2n+1] + 2}{4} \right\rfloor \qquad (8.b)$$

The filters use 2's complement arithmetic. Although the pixels are B bits depth the operations are done in $B+2$ bits. Additional two bits are called the *guard bits. Computation Kernel Unit* has four inputs (in00, in01, in 11, in10) and two outputs (out0, out1). These nets and their corresponding sequences in Equation 8 are as follows:

**Table 1 :** Nets and their corresponding sequences.

| Net | Sequence |
|---|---|
| in00 | X[2n] |
| in01 | X[2n+2] |
| in 10 | Y[2n-1] |
| in11 | X[2n+1] |
| out0 | Y[2n] |
| out1 | Y[2n+1] |

It is seen that *Computation Kernel Unit* is a combinational logic which implements the two functions:

$$f_{even}(in00, in01, in10, in11) = out0 \qquad (9.a)$$

$$f_{odd}(in00, in01, in10, in11) = out1 \qquad (9.a)$$

*Computation Kernel Unit* is instantiated in each level and in both horizontal and vertical filters.

Horizontal filter has 4 delay elements which provide taps for the Lifter Module (Figure 7). Since the filter should split the input sequence into two down-sampled versions and should accomplish symmetric extension at the boundaries input sequence is not constantly fed from the first delay element but is given to alternating elements according to the current state of the module.

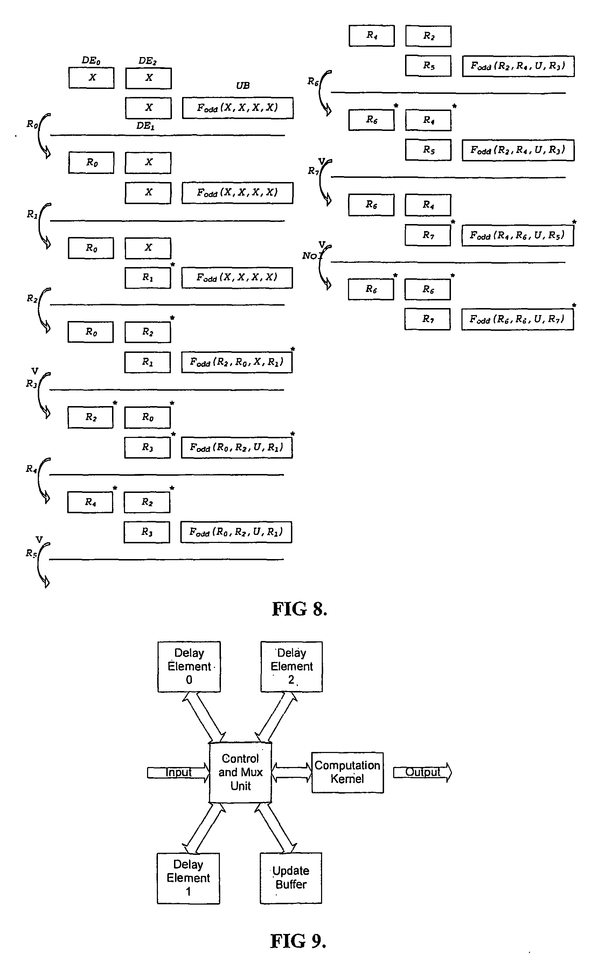

Figure 8 shows the operation of the *horizontal filter,* where $DE_0$, $DE_1$, and $DE_2$ are the delay elements and UB is the Update Buffer. The input sequence is the rows of a frame $LL_i^j(x,y)$ and $R_n$ denotes the $n^{th}$ sample of the row $LL_i^j(x, y_0)$ which is being processed. For the sake of illustration the contents of $DE_0$, $DE_1$, $DE_2$ and UB are shown while processing rows consisting of eight samples. The superscript V indicates that the data in the Update Buffer is valid and the valid_out output is asserted. Modified buffers at each step are indicated with an asterisk.

When a new line begins the filter fills the buffers accordingly to accomplish the symmetric extension at the beginning of the line. The input pins of the *computation kernel* are multiplexed so that at different stages of the filtering different buffers are used as operands (i.e. taps). The outputs of the *Computation Kernel* (i.e. update values) are latched to update buffers. In Figure 8 the functions are seen with buffers in parenthesis which are used as operands at that step.

The filter has to conclude up the data with the symmetric extension at the ending edge before a new line begins. The outputs of the filter out_0 and out_1 are $(LL)^jL_i$, which is the low-pass (L) decomposition, and $(LL)^jH_i$ which is the high-pass (H) decomposition of the signal $LL_i^j(x, y_0)$ respectively. Each output has half the bandwidth the original input has. Since there are two outputs, the total bandwidth remains unchanged. These two outputs are fed in *Vertical Filter* which processes them independently of each other.

Vertical Filter Unit is repeated once in each level after *horizontal filter.* It receives the low-pass and high-pass data sequences and filters them vertically. Like the *horizontal filter,* this module also uses lifting steps to filter the data.

Unlike the *horizontal filters'* being identical for all instances throughout the system, *vertical filters* appear in three different types (type A, B and C namely). Figure 9 shows the elements of *vertical filter* which are common for all three modules. *Vertical filter* also includes the *Computation Kernel.*

*Vertical filter* operates on the rows of input block. Horizontal filter at level *j* divides the input blocks ($LL)^{j-1}L_i$ and ($LL)^{j-1}H_i$ which are of size ($N/2^j$) x ($N/2^{j-1}$) into sub-bands $(LL)^j_i$, $(LH)^j_i$ , $(HL)^j_i$ and $(HH)^j_i$ which are of size ($N/2^j$) x ($N/2^j$).

Vertical filter consists of memory blocks *(delay elements), computation kernel* and a *control & multiplexing* block. Memory blocks are used to store sufficient number of lines of the input tile in order to compute the output sequence. In vertical filter there are four delay elements (see Figure 9). These delay elements can be thought as shift registers of the same length as the lines of the input block. *Vertical filter* operates in a manner similar to that of horizontal filter; it splits the input sequence into two down-sampled versions, and applies the symmetric extension in vertical direction. The difference is that the *vertical filter* treats the whole line like *horizontal filter* treats a single pixel.

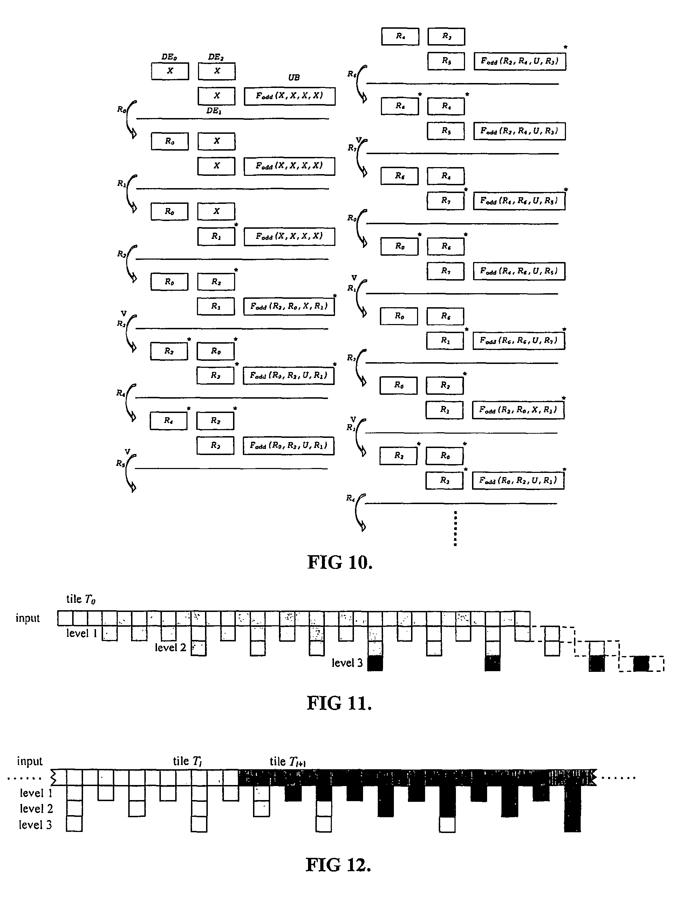

Figure 10 shows the operation of the *vertical filter,* where $DE_0$, $DE_1$, and $DE_2$ are the delay elements and UB is the *Update Buffer*. DE's and UB are of size $N/2^j$, The input sequence is the rows of a block $LL^{j-1}L_i(x,y)$ or $LL^{j-1}H_i(x, y)$. $R_n$ denotes the $n^{th}$ row of the block $LL^j_i(x,y)$ which is being processed. For the sake of illustration the contents of $DE_0$, $DE_1$, $DE_2$ and UB are shown while processing rows consisting of eight samples. The superscript V indicates that the data in the Update Buffer is valid and the valid_out output is asserted. Modified buffers at each step are indicated with an asterisk.

When the first tile begins the filter fills the buffers accordingly to accomplish the symmetric extension at the beginning of the tile. The input pins of the computation kernel are multiplexed so that at different stages of the filtering different buffers are used as operands (i.e. taps). The outputs of the *computation kernel* (i.e. update values) are latched to update buffers. In Figure 10 the functions are seen with buffers in parenthesis which are used as operands at that step.

To the contrary of horizontal filter's operation on the ending edge of a line, vertical filter does not conclude up the ending tile's data before a new tile arrives. As a matter of fact, it waits for the first lines of the new coming tile, and outputs the last line while the input lines are filling the delay elements. Although it is possible to conclude the output tile before a new input tile arrives this scheme is not preferred since this would cause the contention of the outputs from different levels at the *data interface* side. This will be explained in section 6.

After the acquisition of last tile ends, i.e. there will no upcoming next tile, state machine outputs the very last line maintaining a throughput which is tolerable to *data interface unit.*

Vertical filter of type A has a delay of three rows. In figure (11 and 12) output timings of 3 cascaded 2D filters are illustrated. Each box represents a row of data from sub-bands belonging to the corresponding level. A row from level j contains $N/2^j$ pixels and each level contains $N/2^j$ rows.

In Figure I 1 the case for a single tile -in which the single tile is the first tile as well as it is the last tile- is seen. Each level receives its input form the previous level (this is called the *input level)* and releases its data after a delay of three rows. When the input level of a filter ends up, the filter concludes its data as shown in figure.

In Figure 12 the joint of two consecutive tiles is illustrated. It is seen that the levels do not conclude up a tile at the same time. As long as the input rows keep coming, a filter maintains its outputting scheme regardless of the tile beginning/endings. Symmetric extensions are fulfilled by the multiplexing among the buffers inside. In Figure 12, color of the boxes denotes to which tile the lines belong.

In Fig. I I and Fig. 12, it is seen that the outputs of each level come out at the same time. This results a burstfull operation and the non-efficient utilization of bandwidth. To avoid this problem the vertical filters except the one at the last level are modified in a way so that their data to *Data Interface Unit* comes out with one row delay while it is send to next level without delay. This requires even and odd update values to be buffered. Since the odd update values are already buffered in the update buffer (see Fig. 9), only one delay element is required for the even values. Data Scheduling Unit handles this buffering operation.

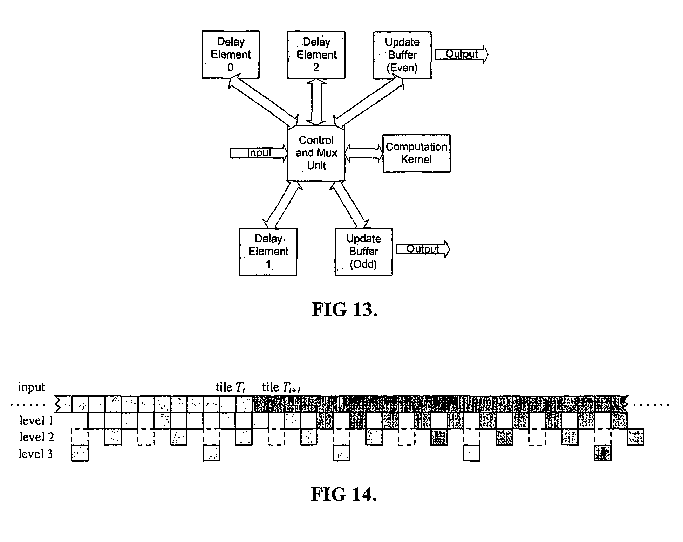

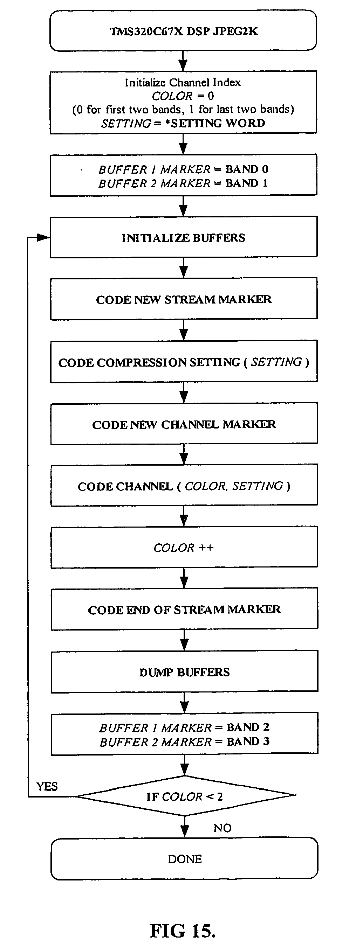

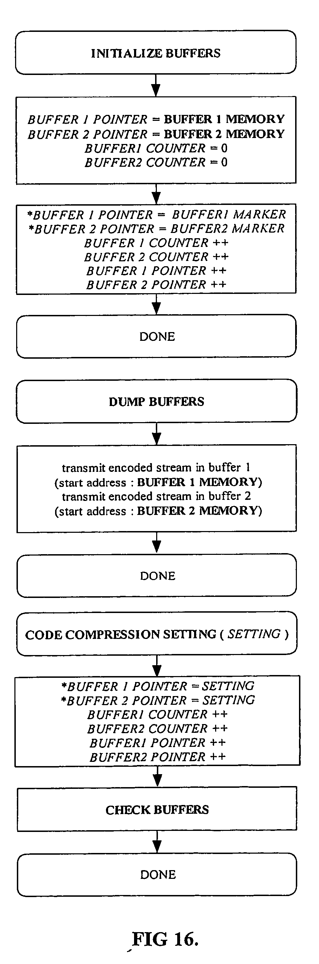

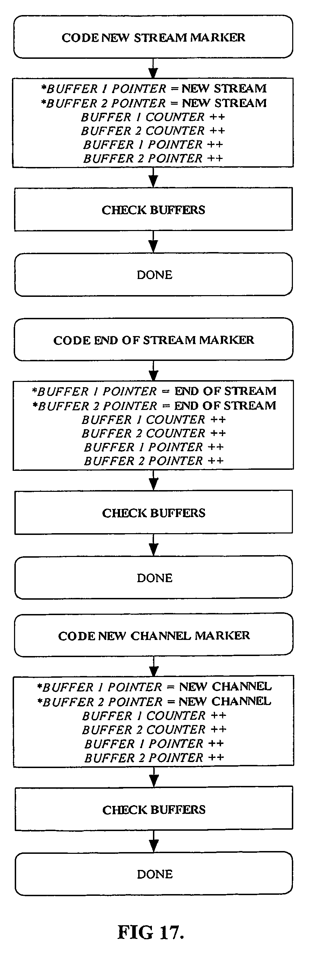

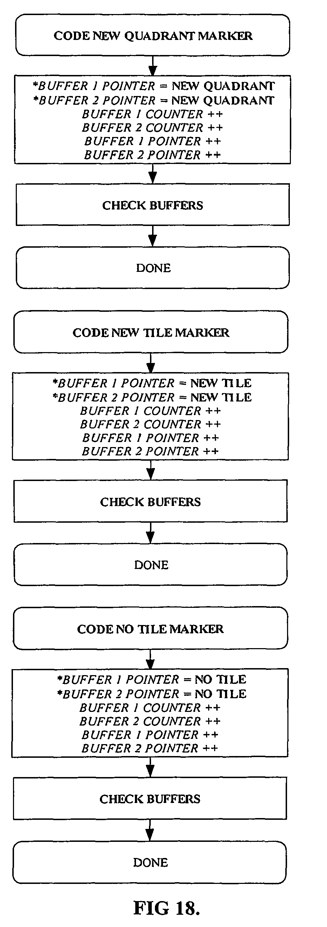

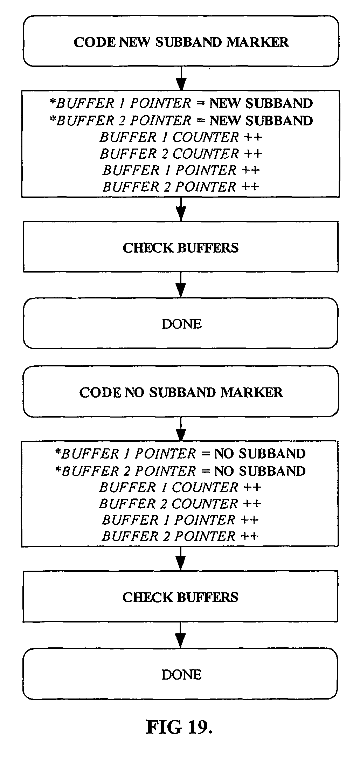

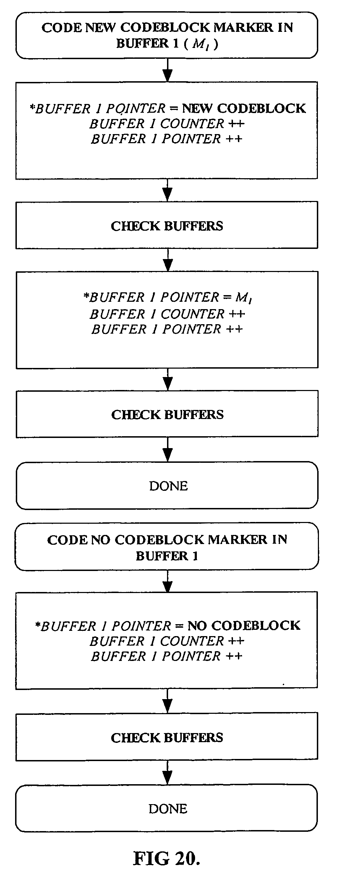

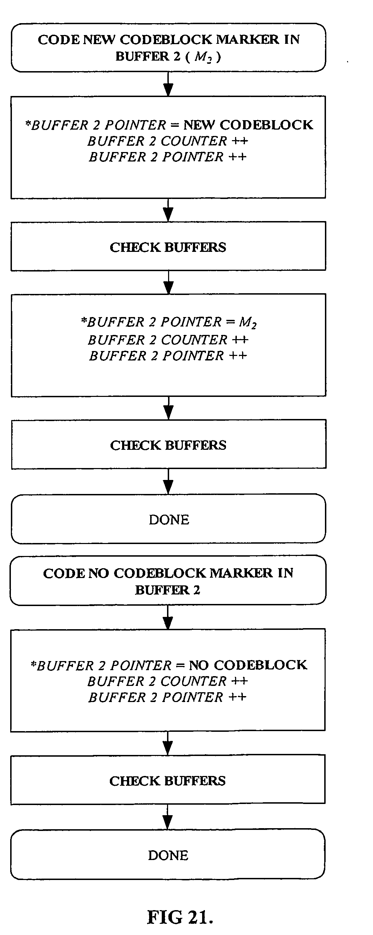

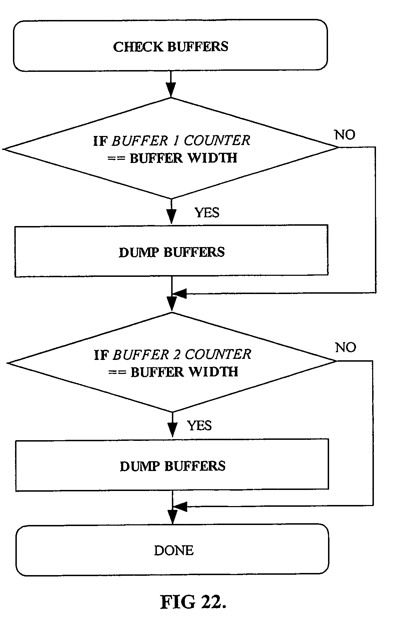

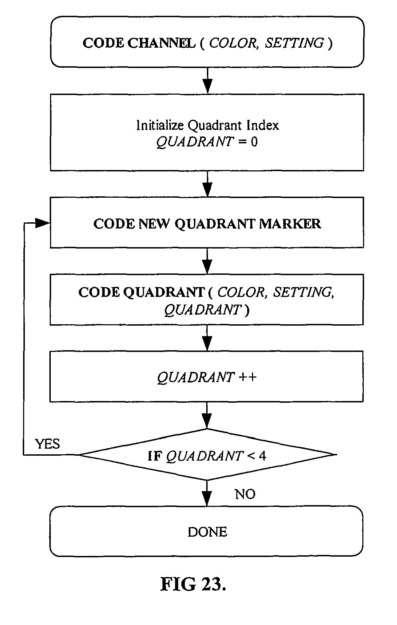

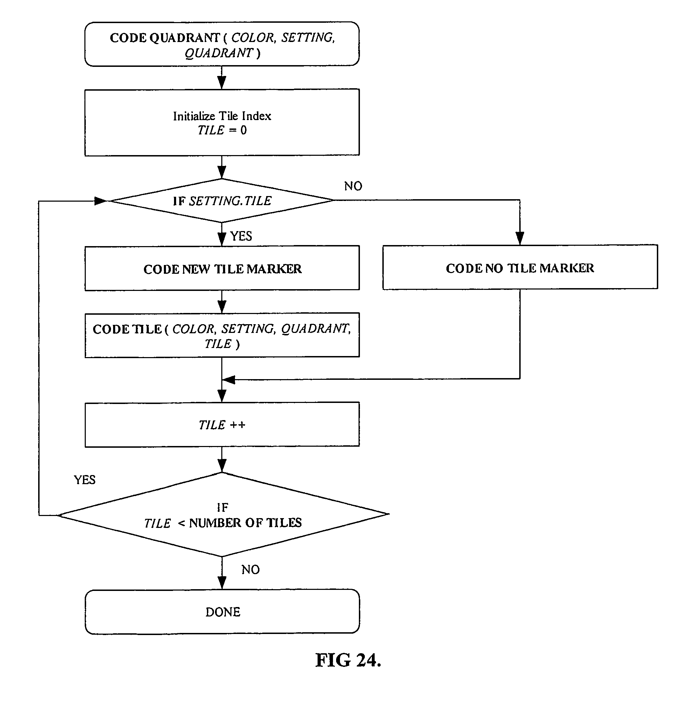

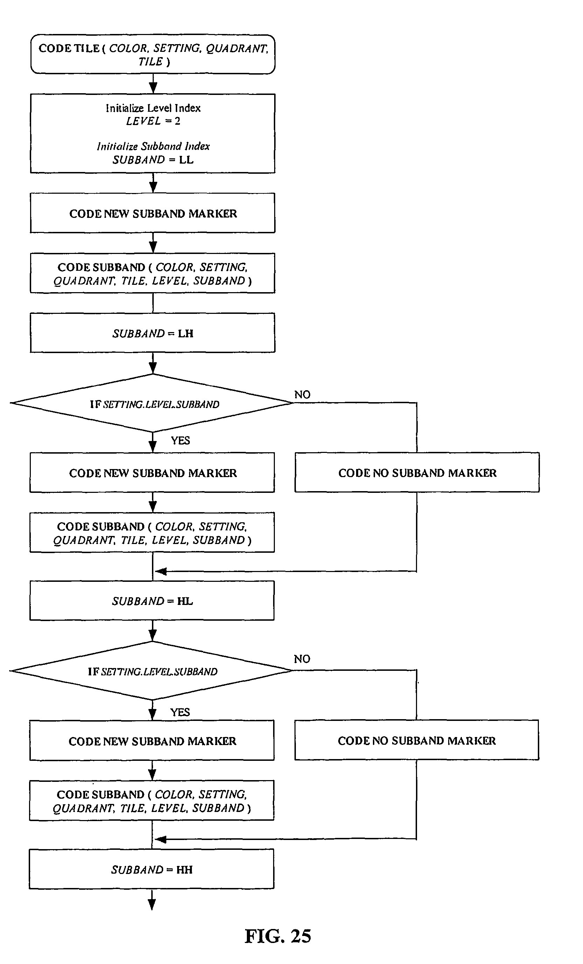

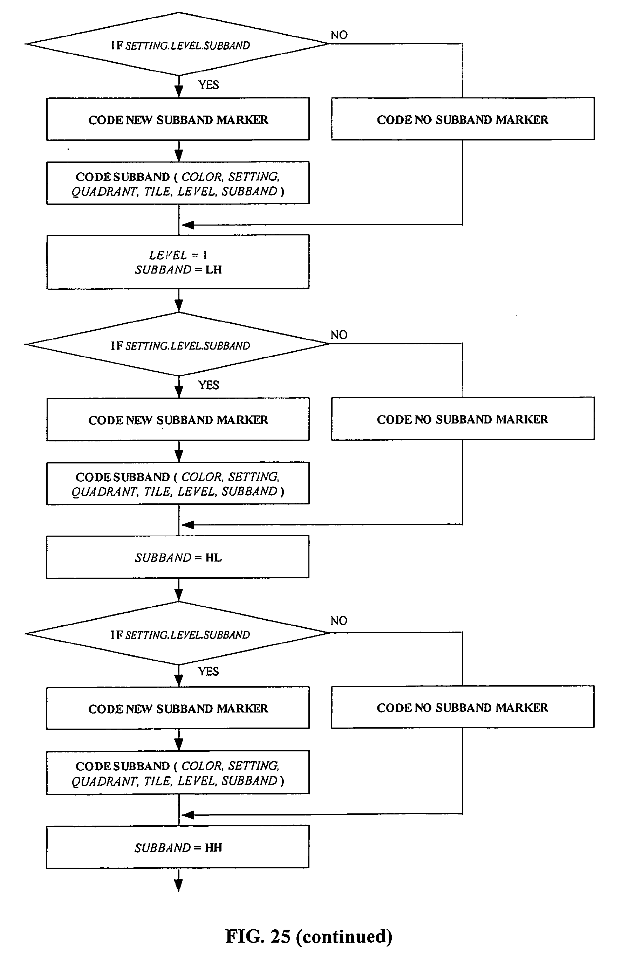

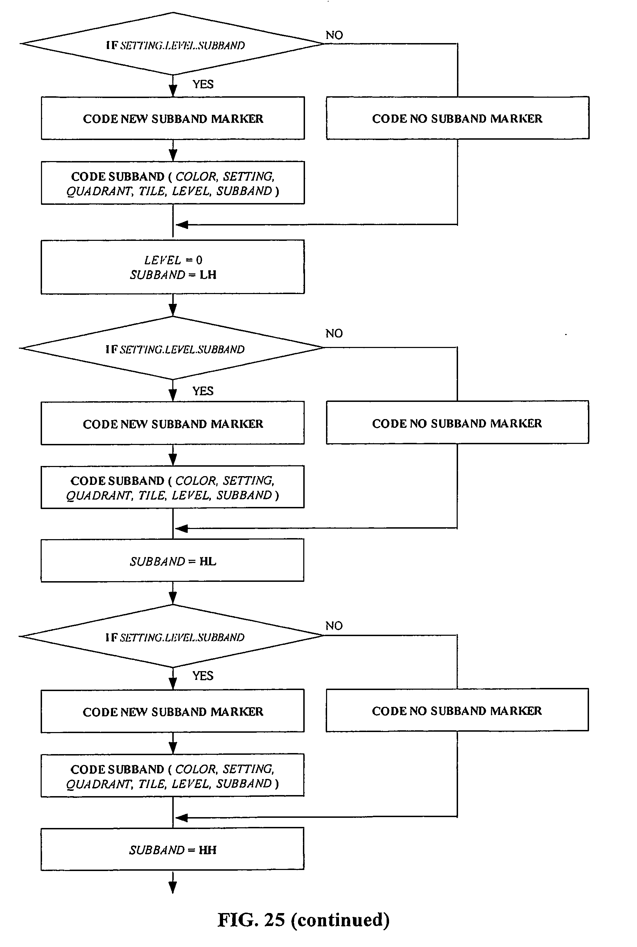

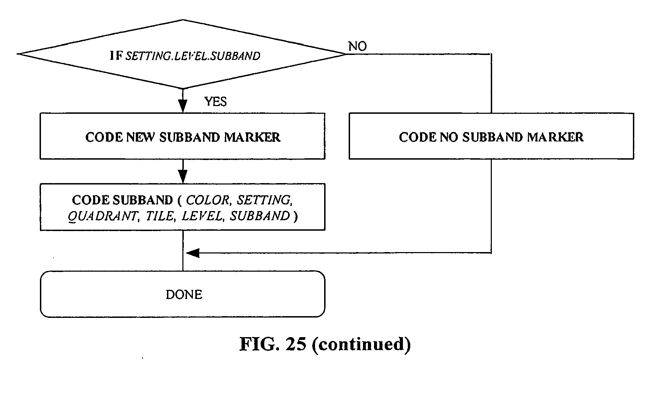

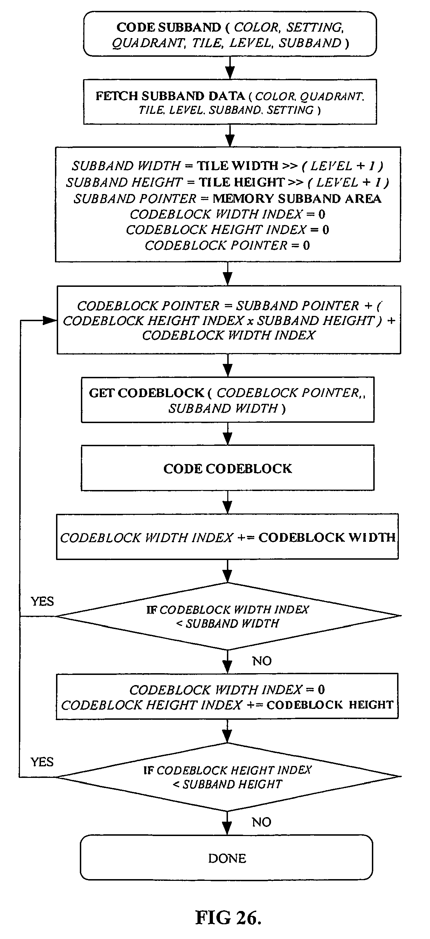

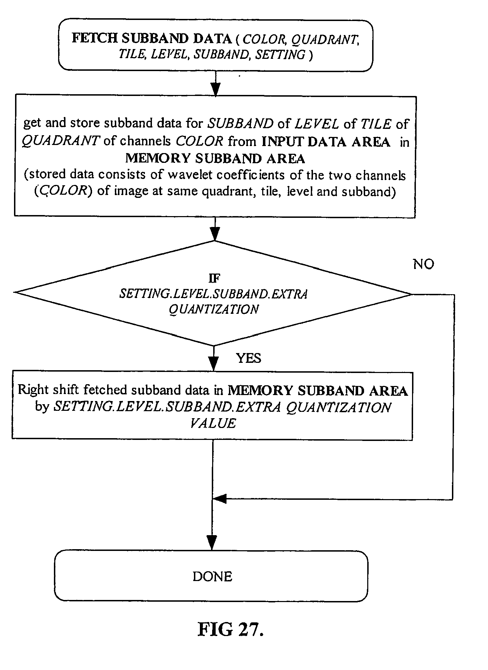

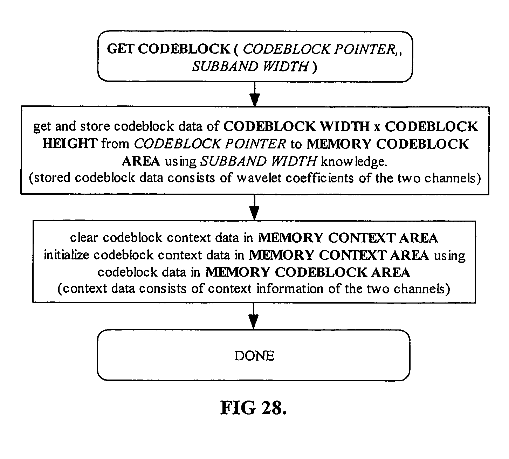

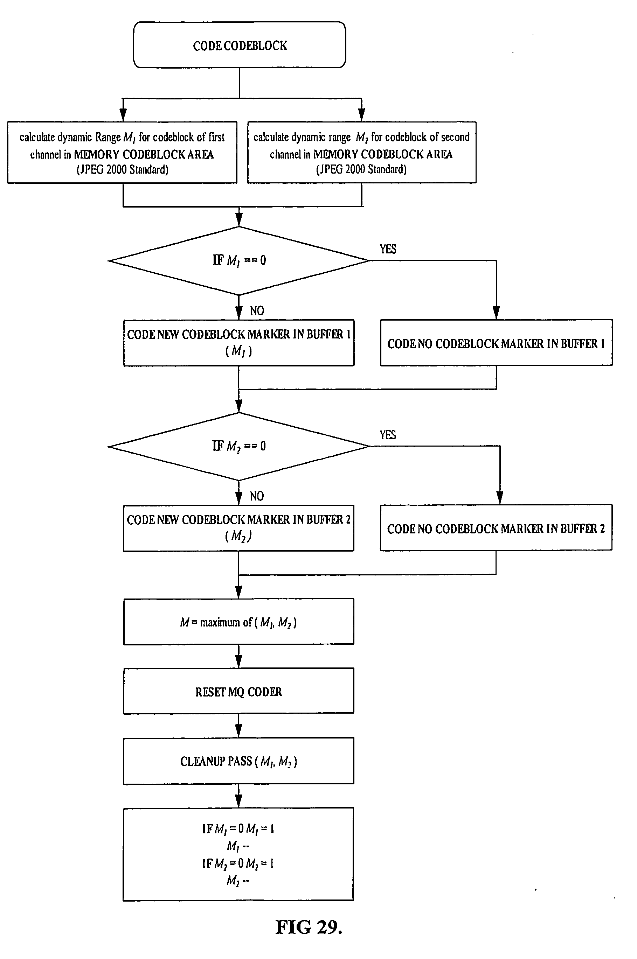

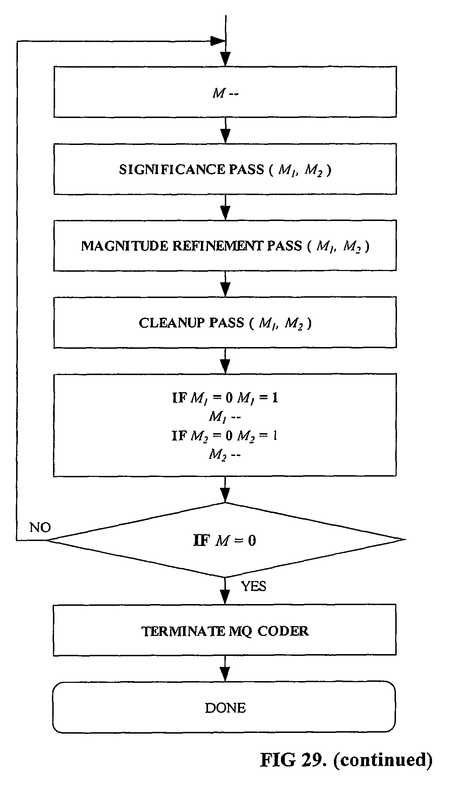

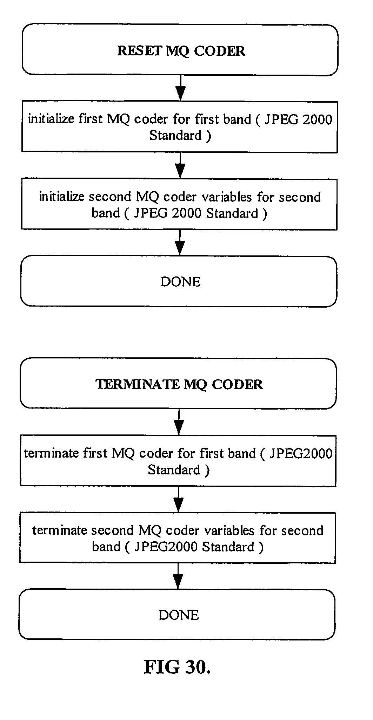

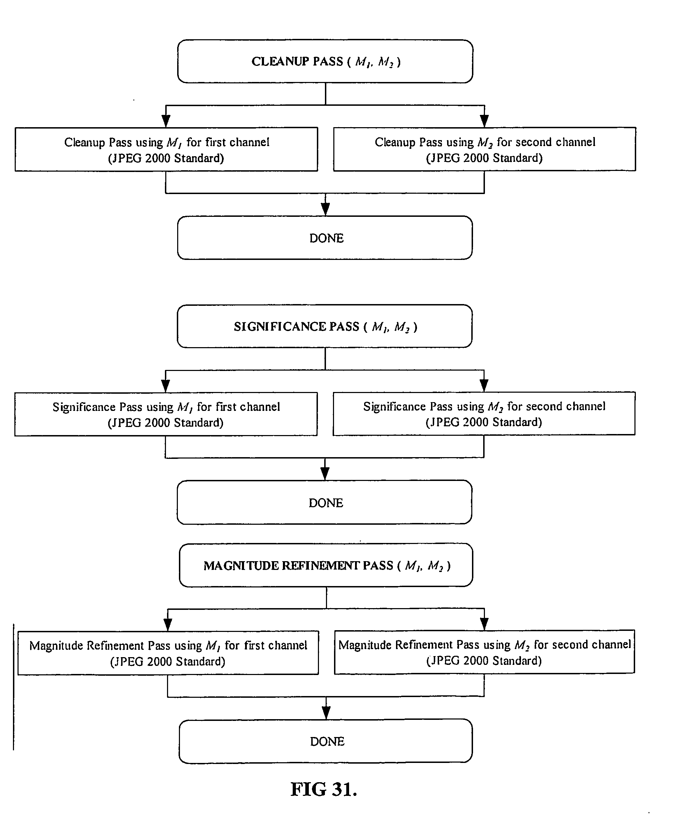

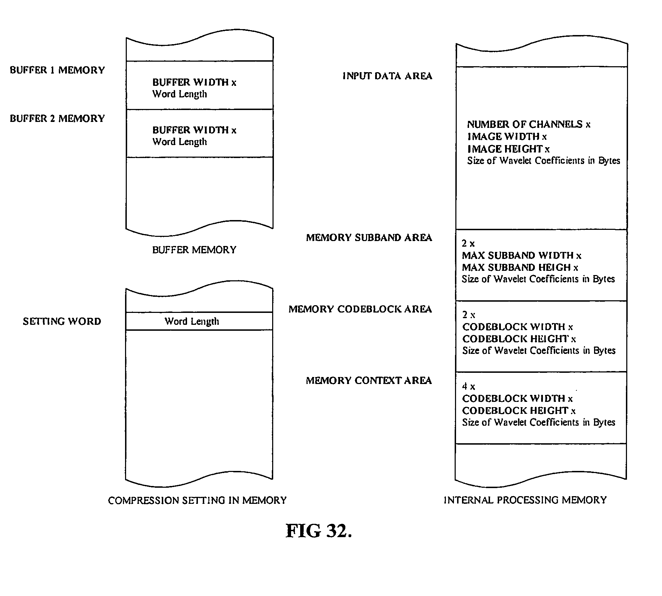

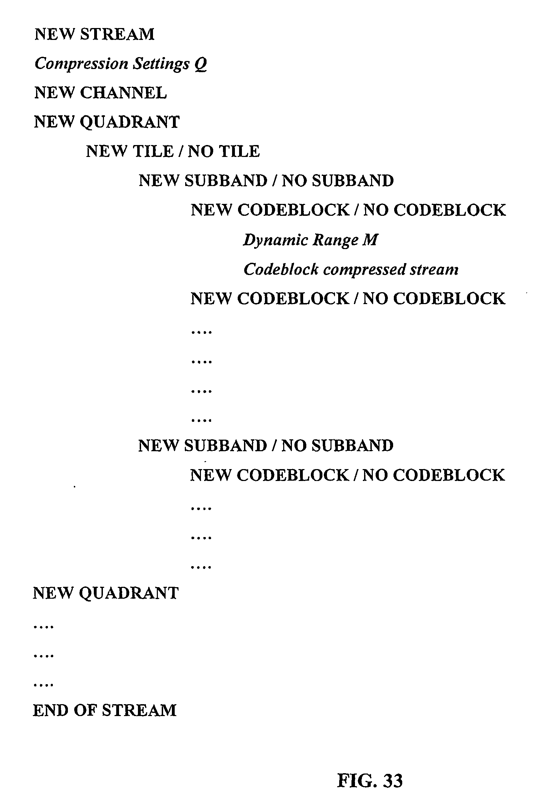

Figure 13 shows the modified vertical filter structure (Type B).

Figure 14 shows the new timing diagram for three levels when the first two levels contain vertical filter of type A and the last one contain vertical filter of type B. The dashed boxes indicate the occurrence of outputs without delaying.

Let the delay introduced by the *horizontal filter* between the last sample of input row $y_o$ and output *row $y_o$* (i.e. delay between the samples $LL^j_i(N/2^j-1,y_o)$ and $(LL)^jL_i(N/2^{j+1}-l,y_0)$) be i cycles. Then, the total delay - say *skew delay-* introduced by horizontal filters from the $k^{th}$ level up to the $j^{th}$ level in terms of cycles is :

$$s = (j-k)t \qquad\qquad (10)$$

If the time elapsed between two consecutive input samples is larger than,

$$\max\{s\} = (J-1)t \qquad\qquad (11)$$

there will be no problem for the output rows to be fit into the slots shown in Figure 14. Though, if max{s} is larger or equal, there will be overlapping between outputs of different levels. This can be avoided by reducing max{s} by adding additional delay in vertical filters in smaller levels. Vertical filter of Type C which has an additional delay of appropriate number of samples can be used.

*Data Interface Unit* receives output data from *Multi-channel FIR filter Unit.* This unit is responsible of organizing data in appropriate format and sending it to *Local Data Storage Unit.*

As mentioned above computations are done in $B+g$ bits where $g$ is the number of *guard bits.* This is needed in order to prevent the overflow in computations. Therefore the bit-depths of outputs $C^j_i$ are $B+g$ bits. Since for achieving high rates of compression quantization is already applied to coefficients, and since omitting least significant bits not more than the number of guard bits does not bring any degradation in terms of perceptual quality, these bits can be omitted (resulting a quantization in coefficients) for the following reasons:

i. The channel bandwidth between *DWT module* and *Entropy Coder* may not be high enough for the throughput requirements,
ii. Large *Local Data Storage* may not be feasible for the system configuration.
iii. Rearrangement of coefficients in order to store B+g bit data compactly in multiple-of-B bit storage unit may require excessive amount of logic or buffers in reconfigurable logic.

*Multi-channel FIR filter Unit* releases the coefficients $LH^j_i, HL^j_i, HH^j_i$ ($j = 1...J$) and $LL^J_i$ such that at each time only one row from one level comes out as shown in Figure 14. The releasing schedule of the levels constitutes a well-defined pattern which is independent of which tile a row belongs to.

The coefficients are written to *Local Data Storage Unit* with the same schedule. Coefficients from all sub-bands in a level come out at the same time, however these coefficients are processed in different times. Therefore, if these coefficients are packed together, there will be redundant reading from the *LDSU.* In order to prevent redundant reading of *Data Fetch Unit,* the coefficients can be organized such that consecutive samples are packed in a word. This requires *Data Interface Unit* to buffer $(x_{2k}, y_0)^{th}$ coefficient and combine with the $(x_{2k+l}, y_0)^{th}$ *coefficient* before sending. The essential point is to pack consecutive coefficients into the same word. However there are a few ways to do this. As an example two possible placements of coefficients in level j into a word of size 4B is as follows:

**Table 2:** The placement of coefficients into a word of 4B bits. C denotes any one of *LH, HL*, *HH* for levels *I...J* and *LL* for level *J.*

| Bits: | [4$B$-1...3$B$] | [3$B$ - 1...2$B$] | [2$B$ - 1...$B$] | [$B$-1...0] |
|---|---|---|---|---|
| Content 1: | $C^{MSB}_G(x_{2k+1}, y_0)$ | $C^{LSB}_G(x_{2k+1}, y_0)$ | $C^{MSB}_G(x_{2k}, y_0)$ | $C^{LSB}_G(x_{2k}, y_0)$ |
| Content 2: | $C^{LSB}_G(x_{4k+3}, y_0)$ | $C^{LSB}_G(x_{4k+2}, y_0)$ | $C^{LSB}_G(x_{4k+1}, y_0)$ | $C^{LSB}_G(x_{4k}, y_0)$ |

When valid_out of a level is asserted, if it is a level between land *(J-1),* 3 words which contain *LH, HL* and *HH* are written, and if it is the level *J* 4 words which also contain *LL* is written.

Entropy Encoding Unit can be defined as the JPEG2000 encoding unit, that fetches and processes quantized wavelet coefficients of images from memory, decides on the encoding settings and formats the compressed bit stream. Entropy Coding Unit consists of four units:

• Data Fetch Unit
• Coefficient Bit Modeling Unit
• Arithmetic Encoding Unit
• Stream Formatting Unit

The flow diagrams through Figure 15 to Figure 31 present the pseudo JPEG2000 algorithm implemented in the Entropy Coding Unit of the apparatus according to the present invention describing parallel implementation of multiple image components, buffer organization, compressed stream format and integration of compression settings to the implementation adopted. Number of color channels of the image to be encoded is 4 for this flow diagram. For the given flow diagrams, it is assumed that same compression setting is used for all components (colors) of image and 3 level wavelet decomposition is applied.

Each function name is typed in bold font, meaning a separate flow diagram of that function also exists. Functions or parts of the algorithm referring to JPEG2000 Standard Implementation or other parts of this document are leaved at their function level with their corresponding notes. Constants are typed in bold font as function names, while variables are typed in italic font.

Refer to Abbreviations for the meanings of abbreviations used.

Data Fetch Unit is the unit fetching wavelet data coefficients and compression settings of Entropy encoding unit from memory. Data Fetch Unit is also a preprocessing step of Coefficient Bit Modeling Unit described below, that initializes the codeblock context data for the codeblock that is being processed (fetched). The specific details of format of quantized wavelet samples are described in Data Interface Unit.

Entropy Encoding Unit decides on the JPEG2000 encoding parameters by *Compression Settings Q* word fetched from memory. Encoding settings fetched from memory allow real time change of JPEG2000 encoding settings and signaling of different encoding choices for different bands of image. *Compression Settings Q* is composed of the following flags:

- Inclusion/exclusion flags of subbands (holding the quantized wavelet samples of image) of each wavelet decomposition level of each tile of each quadrant for each band (color) of image
- Inclusion/exclusion flag of extra quantization at codeblock data fetching level for different subbands of wavelet decomposition levels and the quantity of extra quantization
- Inclusion/exclusion flags of tiles of each band (color) of image so that image size can be changed at real time in proportion with tile size adopted

Coefficient Bit Modeling Unit used in this Entropy Encoding Unit can be described as an embedded block coding algorithm adopted by JPEG2000 which is described in detail in ISO/IEC 15444-1:2000, JPEG 2000 image coding system Part 1: Core coding system.

This block coder can be visualized as a machine processing a single codeblock of quantized subband samples (with a height of $J_1$ and width of $J_2$) and producing an embedded encoded bit stream of a whole number of bytes.

Let $y[j_1,j_2]=y[j]$ be the $J_1 x J_2$ array of quantized subband samples constituting the codeblock. The quantized subband samples are represented in sign-magnitude form, specifically the sign denoted by $x[j] \in \{0,1\}$, and the magnitude denoted by $v[j] \geq 0$.

First operation of the block coder is the determination of the number of bits $M$, which are required to represent the quantized subband magnitudes, $v[j]$. $v[j]$ is less than $2^M$ for all $j \in [0,J_1) x [0,J_2)$. $M$ is the bit dynamic range of the quantized subband magnitudes of the codeblock in process.

Block coding proceeds incrementally through the $M$ magnitude bitplanes of the quantized subband values, starting with the most significant bit plane, $p=M-1$, and proceeding down to the least significant bit plane, $p=0$. This coding procedure involves a number of coding passes through the all codeblock bitplanes. The first coding pass, $z=1$, represents the most significant magnitude bit plane, $p=M-1$. Thereafter, three coding passes are used to represent each successive bit plane, so that the total number of coding passes is $Z = 3M-2$. More in-depth details can be found in ISO/IEC 15444-1:2000.

In embedded block coder adopted by JPEG2000, binary symbols are encoded in one of 19 contexts whose labels, $K$, are the indices used index the context state file. More specific details are described in ISO/IEC 15444-1:2000.

At each codeblock sample location j, the embedded block coder keeps three binary state variables, $\sigma[j]$, $\beta[j]$ and $\pi[j]$. $\sigma[j]$ is the significance state of the sample. The value of $\sigma[j]$ is initialized to 0 and becomes 1 when the first non-zero magnitude bit is coded for the sample. The sample becomes significant at this point. $\beta[j]$ holds a delayed version of $\sigma[j]$. $\beta[j]$ is initialized to 0 and becomes 1 after the first magnitude refinement coding step at location $j$. This occurs in bit plane following that in which the sample first became significant. The value of $\pi[j]$ is set during the first coding pass of each bit plane. If the sample is processed in that coding pass, it is set to 1, otherwise set to 0. This helps to determine the coding pass membership of the sample for subsequent bitplane coding passes.

In each of its 3M-2 bitplane coding passes, the block coder follows a stripe oriented scan through the codeblock samples, as described in ISO/IEC 15444-1:2000. Each stripe represents four rows of codeblock samples.

Bitplane coding pass membership and coding context labels, $K$, of a sample are determined on the basis of state, sign and magnitude information within a *3x3* neighborhood of quantized subband values of the sample. Specific details of the functions defined on the neighborhood functions can be found in ISO/IEC 15444-1:2000. The details of each type of bitplane coding pass (significance propagation, magnitude refinement and cleanup) can be found in ISO/IEC 15444-1:2000.

Subband values, i.e. quantized wavelet coefficients fetched from wavelet coefficient memory, consist of two quantized wavelet coefficient values for different two bands of image that is being encoded. Hence, each codeblock has the information of two color bands of the image, and these two color information is processed in parallel.

For each color data of codeblock fetched, a separate dynamic range, *M*, is calculated and is signaled in corresponding byte stream buffer of the codeblock. Representing the calculated dynamic ranges respectively as $M_1, M_2$ for two colors that are being processed in parallel, there are a total of $3M_1 + 3M_2 - 4$ bitplane coding passes to be executed for one codeblock data fetched from wavelet coefficient memory.

Using the knowledge of dynamic range for two codeblock of two colors fetched in one codeblock from wavelet coefficient, $M_1$ and $M_2$, the same indexed bitplane coding passes are executed in parallel, while if any bitplane coding pass index for one color codeblock do not exist for the other color codeblock (due to smaller dynamic range), these bit plane coding passes (for color with higher dynamic range) is executed alone.

As mentioned above, embedded block coder maintains three binary state variables for coding pass membership, coding pass updates, and for calculation of context labels, K, using a 3x3 neighborhood function centered around the quantized wavelet sample location, j. In this, a single 16 bit array of codeblock size is maintained to accumulate all this binary state variables and to ease the context calculation by getting rid of neighborhood functions. Specifically, the 16 bit codeblock context data for location, j, consists of the sign of quantized wavelet coefficient sample $x[jj]$, $\sigma[j]$, $\beta[j]$, $\pi[j]$, sign knowledge of 4 vertical and horizontal neighbor samples, significance knowledge ($\sigma[j]$) of 8 neighbor samples in 3x3 neighborhood. This codeblock context data is initialized at the time when the codeblock data is fetched from memory (initialization requires only the setting of sign bits in array). By simple bitwise operations on this context array, coding pass membership tests, updates and calculation of context labels are handled easily. Also the pre-computed context labels, are stored in memory (5 lookup tables), so that by a simple shifting operation on codeblock context data, context label, K, for any location, j, in codeblock can be fetched from lookup tables by the help of embedded index of context label in sample's codeblock context data. More details of this coefficient bit modeling procedure can be found in "Jpeg2000: Image Compression Fundamentals, Standards, and Practice", David S. Taubman, Micheal W. Marcellin, Kluwer International Series in Engineering and Computer Science, Secs 642, November, 2001.

Since two color data, i.e. two independent codeblocks are processed in parallel, the codeblock context array is extended to 32 bit array for proper indexing and bitwise operations.

JPEG2000 creates an embedded representation for each codeblock of quantized subband samples in sign-magnitude representation by applying a bit plane coding procedure. The bit plane coding procedure is an efficient mapping of binary symbols to compressed data bits. This mechanism is a specific version of arithmetic coding known as MQ coder.

Arithmetic Encoding Unit described in this part is adopted from this MQ Coder.

MQ coder may be understood as a machine which maps a sequence of binary input symbols, $x_n \in \{0,1\}$, and associated context labels, $K_n$, to a single compressed codeword. MQ coder output is a part of a larger compressed stream, that is the compressed stream of the all codeblocks and hence all image. MQ codeword segment can consists of anything from a single bitplane coding pass of a codeblock to all bitplane coding passes of the codeblock.

The codeword segment of a codeblock is generated incrementally as the symbol and the context pairs $(x_n, K_n)$ arrive from coefficient bit modeling unit.

MQ coder, i.e. Arithmetic Encoding Unit, is described in terms of the following components:

- A set of internal state variables, *A, C, t, T* and *L*. *A* and *C* denote the internal length and lower bound registers described by Taubman, which are common to most implementations of the arithmetic coding principle. L represents the number of code bytes, which have been generated so far. T is a temporary byte buffer and is a down counter which identifies the point *(t=0)* at which partially generated bits should be moved out of the C register into the temporary byte buffer, T. More specifically, T points to the memory storage area holding the compressed stream of images being encoded for this implementation of Arithmetic Encoding Unit.

- A context state file with a pair of entries $(\Sigma_K, s_K)$ for each possible context label K. The single bit, $s_K \in \{0,1\}$, defines the MPS (most probable symbol) for the coding context labeled *K*. $\Sigma_K$, is a 6 bit quantity which identifies the MPS probability estimate for this coding context. JPEG2000 defines 19 contexts.

- A set of probability mapping rules which are used to interpret and manipulate the context state $(\Sigma_K, s_K)$ for the current coding context. The probability mapping rules can be understood in terms of four functions (lookup tables), which are defined by Taubman. The function $p(\Sigma_K)$ defines the relationship between the state value, $\Sigma_K$, and the LPS (least probable symbol) probability estimate for context K. The functions, $\Sigma_{MPS}$ and $\Sigma_{LPS}$ identify the value for $\Sigma_K$ depending on whether the coded symbol is an MPS ($x_n = s_{K_n}$) or an LPS ($x_n = 1 - s_{K_n}$) respectively. The function $X_S$ is invoked only after coding an LPS; it indicates whether or not MPS and LPS symbols should be exchanged, i.e. whether or not $S_K$ should be replaced by $1 - s_K$.

More specific details about MQ coder algorithm adopted in JPEG2000 and execution steps can be found in "Jpeg2000: Image Compression Fundamentals, Standards, and Practice", David S. Taubman, Micheal W. Marcellin,

EP 1 652 146 B1

Kluwer International Series in Engineering and Computer Science, Secs 642, November, 2001.

As discussed above, MQ coder is the machine, which maps the input symbols of embedded block coder to compressed data stream. Since two color codeblocks are processed in parallel, the internal register files and state file array data maintained by MQ coder are doubled, though a single MQ coder is implemented. MQ coder resumes the knowledge of the codeblock that is being processed by simplying modifying the pointers that it keeps to access to the internal registers and state file array in need.

In JPEG2 000 MQ coder implementation, some combinations of code bytes cannot exist in compressed stream. More specifically, the byte following an *0xFF* must be in the range *0x00* through *0x8F* due to bit stuffing policy procedure used in MQ coder which are defined in ISO/IEC 15444-1:2000. The JPEG2000 standard assigns values in the range *0xFF90* through *0xFFFF* to important code stream markers.

Stream Formatting Unit does not only outputs the compressed stream of Arithmetic Encoding Unit, it also outputs the markers identifying the larger blocks of image (quadrants, tiles, subbands) in conjunction with Data Fetch Unit.

Fig. 33 shows the compressed stream format of one component (color) of an image encoded, adopted in this Stream Formatting Unit. Note that Compression Settings *Q* and Dynamic Range *M* of codeblocks are also signaled in the compressed stream. Refer to Abbreviations for the meanings of abbreviations used.

Besides the stream format showed in Fig. 33, there are also buffer markers that identify the buffered compressed stream and its corresponding component channel (color) in the picture.

The Communication Controller unit according to the present invention implements multiplexing of multi-component image streams from multiple sources and demultiplexing of multiple destinations for compressed image streams.

The Operation Controller unit implements scheduling and sequencing of the Discrete Wavelet Transformation unit, Local Data Buffering unit, Entropy Coding unit, Local Data Storage unit, and Communication Controller unit.

Possible embodiments for the apparatus are Field Programmable Gate Arrays (FPGA), Application Specific Integrated Circuits (ASIC) and General Purpose Digital Signal Processors (DSP) for the units involving computation and control, and SRAM and SDRAM ICs for the units involving data storage.

## <u>ABBREVIATIONS</u>

Below are the descriptions of abbreviations in the flow diagram:

| | |
|---|---|
| **SETTING WORD** | settings in memory :Absolute address of the word containing compression |
| **BAND 0** | : Marker identifying buffer for first band of image |
| **BAND 1** | : Marker identifying buffer for second band of image |
| **BAND 2** | : Marker identifying buffer for third band of image |
| **BAND 3** | : Marker identifying buffer for fourth band of image |
| **BUFFER 1 MEMORY** | : Absolute address of first buffer memory |
| **BUFFER 2 MEMORY** | : Absolute address of second buffer memory |
| **BUFFER WIDTH** | : Buffer Width |
| **NEW STREAM** | : New Compressed Stream Marker |
| **END OF STREAM** | : End of Compressed Stream Marker |
| **NEW CHANNEL** | : New Channel (Band) of Image Marker |
| **NEW QUADRANT** | : New Quadrant Marker |
| **NEW TILE** | : New Tile Marker |
| **NO TILE** | : No Tile Marker |
| **NEW SUBBAND** | : New Subband Marker |
| **NO SUBBAND** | : No Subband Marker |
| **NEW CODEBLOCK** | : New Codeblock Marker |
| **NO CODEBLOCK** | : No Codeblock Marker |
| **TILE WIDTH** | : Tile Width |
| **TILE HEIGHT** | : Tile Height |
| **NUMBER OF TILES** | : Number of Tiles in a Quadrant |
| **MAX SUBBAND WIDTH** | : Maximum Subband Width |
| **MAX SUBBAND HEIGHT** | : Maximum Subband Height |
| **CODEBLOCK WIDTH** | : Codeblock width |
| **CODEBLOCK HEIGHT** | : Codeblock height |
| **INPUT DATA AREA** | : Absolute address of wavelet coefficients in memory |
| **MEMORY SUBBAND AREA** : | Absolute address of subband data in memory |
| **MEMORY CODEBLOCK AREA** : | Absolute address of codeblock data in memory |
| **MEMORY CONTEXT AREA** : | Absolute address of codeblock context data in memory |

| **LL** | : LL subband |
| **LH** | : LH subband |
| **HL** | : HL subband |
| **HH** | : HH subband |
| **NUMBER OF CHANNELS** | : Number of channels(bands) of image |
| **IMAGE WIDTH** | : Image Width |
| **IMAGE HEIGHT** | : Image Height |

**Claims**

1. An image processing system for compressing single and multi-component images in real-time and optimizing the JPEG2000 Image Compression Standard for minimum processing time, minimum storage requirements and architectural scalability, comprising:

   a discrete wavelet transform unit comprising:

   a. a multi-channel FIR filter unit performing discrete wavelet transformation on tile-based image data and consisting of separate cascaded filters for each level of sub-band decomposition, each employing symmetric extension on image tile boundaries;
   b. a data reordering unit, receiving single or multi-component images in a row-based and consecutive manner and rearranging them into image tiles;
   c. a local data buffering unit, temporarily storing a portion of the incoming row-based image data;
   d. a data scheduling unit, rearranging the wavelet coefficients computed by said multi-channel FIR filter unit;
   e. a data interface unit streaming out the wavelet coefficients;

   a local data storage unit temporarily storing the wavelet coefficients streamed out by said data interface unit;
   an entropy coding unit comprising:

   a. a data fetch unit reading the stored wavelet coefficients from said local data storage unit and rearranging them into code blocks;
   b. a coefficient bit modeling unit computing context data for incoming code blocks,
   c. an arithmetic encoding unit constructing a compressed image stream;
   d. a stream formatting unit encapsulating portions of compressed image streams with a set of identification and quality measure markers, prior to storage;

   - said cascaded filters, which constitute said multi-channel FIR filter unit, performing symmetric extensions on said image tile boundaries at each level of sub-band decomposition, by means of a state control units extending each input image line at both ends by generating reflections of said line around the first and last samples and feeding the extended version of each image line to the delay elements of said filters in order to maintain a uniform throughput interface for streaming in consecutive image tiles and for streaming out tile-based image data without any waiting intervals at said image tile boundaries;
   - said data reordering unit reading the stored raw-based image data from the local data buffering unit and rearranging it into small image tiles, as soon as sufficient amount of data to construct an image tile being accumulated at said local data buffering unit;
   - said data scheduling unit buffering and rearranging said wavelet coefficients streamed out in short high-rate bursts from said cascaded filters, that constitute said multi-channel FIR filter unit, in order to reduce the bandwidth requirement of the output interface of said discrete wavelet transformation unit;

   said image processing system **characterized in that** in said stream formatting unit portions of compressed image streams are encapsulated with said identification markers in order to indicate the start of each new component, quadrant, subband, tile and codeblock in said compressed image stream and with said quality measure markers to control the size and quality of the compressed image by indicating compression and dynamic range settings for the amount of quantization being applied at the wavelet coefficients and the information on excluded sub-bands or tiles of said compressed stream.

2. An image processing system according to claim 1, is **characterized in that**;

said local data storage unit storing only a portion of the wavelet coefficients streamed out by said data interface unit;

as soon as sufficient amount of wavelet coefficients to construct a code block being accumulated, said data fetch unit reading the stored wavelet coefficients from said local data storage unit into code blocks;

a uniform data flow being maintained by concurrent operation of said data interface unit and said data fetch unit.

3. An image processing system according to claim 1, is **characterized in that**;

said single coefficient bit modeling unit performing real-time quality measure evaluation on each one of the multiple image components independently;

said single arithmetic encoding unit processing multiple image components in parallel by means of multiple context registers and multiple output buffers for separately storing compressed image streams;

said stream formatting unit inserting the said markers to the start of said compressed image streams and then multiplexing compressed and encapsulated image streams from multiple image components, into a single output stream such that content of each output buffer being appended to the previous one streamed out.

4. An image processing system according to claim 1, wherein said image processing system further comprises a reversible color transform unit which is included in the system prior to said discrete wavelet transform unit.

5. An image processing system according to claim 1, wherein said image processing system also comprises a communication controller unit multiplexing multi-component image streams from multiple sources and demultiplexing multiple destinations for compressed image streams.

6. An image processing system according to claims 1 and 5, wherein said image processing system also comprises an operation controller unit scheduling and sequencing the operations of said discrete wavelet transform unit, local data storage unit, entropy coding unit and communication controller unit.

7. An image processing system according to claim 1, wherein said data reordering unit, said multi-channel FIR filter unit, said data scheduling unit and said data interface unit are implemented in a Field Programmable Gate Array (FPGA).

8. An image processing system according to claim 1, wherein said data reordering unit, said multi-channel FIR filter unit, said data scheduling unit and said data interface unit are implemented in an Application Specific Integrated Circuit (ASIC).

9. An image processing system according to claim 1, wherein said data reordering unit, said multi-channel FIR filter unit, said data scheduling unit and said data interface unit are implemented in a general purpose Digital Signal Processor (DSP).

10. An image processing system according to claim 1, wherein said local data buffering unit is implemented in SRAM or SDRAM memory ICs.

11. An image processing system according to claim 1, wherein said data fetch unit, said coefficient bit modeling unit, said arithmetic encoding unit and said stream formatting unit are implemented in a FPGA.

12. An image processing system according to claim 1, wherein said data fetch unit, said coefficient bit modeling unit, said arithmetic encoding unit and said stream formatting unit are implemented in an ASIC.

13. An image processing system according to claim 1, wherein said data fetch unit, said coefficient bit modeling unit, said arithmetic encoding unit and said stream formatting unit are implemented in a general purpose DSP.

14. An image processing system according to claim 1, wherein said local data storage unit is implemented in SRAM or SDRAM memory ICs.

15. An image processing system according to claim 1, wherein said data reordering unit, said multi-channel FIR filter unit, said data scheduling unit, said data interface unit, said data fetch unit, said coefficient bit modeling unit, said arithmetic encoding unit and said stream formatting unit are implemented in a FPGA.

**16.** An image processing system according to claim 1, wherein said data reordering unit, said multi-channel FIR filter unit, said data scheduling unit, said data interface unit, said data fetch unit, said coefficient bit modeling unit, said arithmetic encoding unit and said stream formatting unit are implemented in an ASIC.

**17.** An image processing system according to claim 5, wherein said communication controller unit is implemented in a FPGA.

**18.** An image processing system according to claim 5, wherein said communication controller unit is implemented in an ASIC.

**19.** An image processing system according to claim 6, wherein said operation controller unit is implemented in a FPGA.

**20.** An image processing system according to claim 6, wherein said operation controller unit is implemented in an ASIC.

## Patentansprüche

**1.** Bildverarbeitungssystem zur Echtzeit-Kompression von einzelnen Bildern oder von Bildern aus mehreren Komponenten zur Optimierung des JPEG2000-Standards zur Bildkomprimierung im Hinblick auf minimale Bildverarbeitungszeiten, minimale Speicheranforderungen und architektonische Skalierbarkeit, das umfasst:

eine diskrete Wavelettransformations-Einheit, die umfasst:

a. Mehrkanalige FIR-Filter-Einheit, die auf Tile-basierten Bilddaten diskrete Wavelet-Transformationen anwendet und die aus getrennten kaskadierten Filtern für jede Stufe der Subband-Zerlegung besteht, wobei jeder eine symmetrische Erweiterung der Tiles vornimmt;
b. Datenumordnung-Einheit, die einzelne Bilder und Bilder aus mehreren Komponenten zeilen basiert und aufeinander folgend erhält und in Tiles neu ordnet;
c. Lokale Datenzwischenspeicherungs-Einheit, die einen Teil der eingehenden, zeilenbasierten Bilddaten speichert;
d. Datenplanungs-Einheit, welche die Wavelet-Koeffizienten neu ordnet, die von besagter mehrkanaliger FIR-Filter-Einheit berechnet wurden;
e. Datenschnittstellen-Einheit, welche die Wavelet-Koeffizienten abgibt; eine lokale Datenspeicherungs-Einheit, die temporär die Wavelet-Koeffizienten speichert, die von besagter Datenschnittstellen-Einheit abgeben wurden;

eine Entropieodierungs-Einheit, die umfasst:

a. Datenabholungs-Einheit, die die gespeicherten Wavelet-Koeffizienten aus der Datenspeichereinheit liest und sie in Code-Blocks ordnet,
b. Koeffiziente Bitmodellierungseinheit, die Kontextdaten für eingehende Code-Blöcke berechnet;
c. Arithmetische Kodierungseinheit, die einen komprimierten Bilddatenstrom erzeugt;
d. Datenstromformatierungs-Einheit, die vor der Speicherung Teile komprimierter Bilddatenströme einfängt und mit einem Set von Identifikations- und Qualitätmessungs-Markern versieht;

- Besagte kaskadierte Filter, die die oben bezeichnete mehrkanalige FIR-Filter-Einheit konstituieren, die auf jeder Stufe der Subband-Zerlegung symmetrische Erweiterungen der Tile-Grenzen ausführt, anhand einer Steuereinheit, die jede eingehende Bildlinie an beiden Enden erweitert, indem sie Reflektionen der besagten Linie über das erste und letzte Muster generiert und die erweiterte Version jeder Bildlinie in das Verzögerungsglied besagter Filter eingibt, um eine einheitliche Datendurchsatzschnittstelle für eingehende konsekutive Tiles aufrechtzuerhalten, und um ausgehende Tile-basierte Bilddaten ohne Warteintervalle auf besagten Tile-Grenzen abzugeben;
- besagte Datenumordnungs-Einheit, welche die gelagerten zeilenbasierten Bilddaten aus der lokalen Datenzwischenspeicherungs-Einheit herausliest und in kleine Tiles neu ordnet, sobald ausreichend Daten zum Aufbau eines Tiles vorhanden sind, die in der lokalen Datenzwischenspeicherungs-Einheit angesammelt werden;
- bezeichnete Datenplanungs-Einheit, die die genannten Wavelet-Koeffizienten, die aus besagten kaskadierten Filtern, die die oben genannte mehrkanalige FIR-Filter Einheit konstituieren, in kurzen, schnellen Bursts ausströmen, zwischenspeichert und neu ordnet, um die Bandbreitenansprüche der Datendurchsatzschnittstelle der besagten diskreten Wavelettransformations-Einheit zu reduzieren;

Das Bildverarbeitungssystem ist **dadurch** charakterisiert, dass in der besagten Datenstromformatierungs-Einheit, Teile komprimierter Bilddatenströme mit den genannten Identifikationsmarkern umschlossen werden, um den Beginn von neuen Komponente, einem Quadranten, Subband, Tile und Code-Block, in besagtem komprimierten Bilddatenstrom anzuzeigen. Gleichermaßen werden sie mit besagten Qualitätsmessungs-Markern umschlossen, zur Kontrolle von Größe und Qualität der komprimierten Bilder, durch die Anzeige der Komprimierungs- und Dynamic-Range-Einstellungen, für die auf den Wavelet-Koeffizienten angewendete Höhe der Quantisierung und die Information über ausgeschlossenen Subbänder oder Tiles besagter komprimierter Datenströme.

2. Ein Bildverarbeitungssystem nach Anspruch 1 ist **gekennzeichnet durch** besagte lokale Datenspeicherungs-Einheit, die nur einen Teil der aus besagter Datenschnittstellen-Einheit strömenden Wavelet-Koeffizienten speichert; sobald genügend Wavelet-Koeffizienten zum Aufbau eines Code-Blocks angesammelt sind, liest besagte Datenabholungs-Einheit die gespeicherten Wavelet-Koeffizienten aus besagter Datenspeicherungs-Einheit in Code-Blocks ein:

ein gleichmäßiger Datenstrom wird **durch** gleichzeitig ablaufende Vorgänge in besagter Datenschnittstellen-Einheit und besagter Datenabholungs-Einheit aufrechterhalten.

3. Ein Bildverarbeitungssystem nach Anspruch 1 ist **gekennzeichnet durch**:

Besagte einzelne koeffiziente Bitmodellierungseinheit, die für jede der zahlreichen Bildkomponenten eine Qualitätsmessung in Echtzeit durchführt;
besagte arithmetische Kodierungseinheit, die zahlreiche Bildkomponenten **durch** zahlreiche Kontextregister und zahlreiche Ausgabe-Puffer parallel verarbeitet, um komprimierte Bilddatenströme separat zu speichern;
Besagte Datenstromformatierungs-Einheit, die die oben genannten Marker am Anfang der oben bezeichneten komprimierten Bilddatenströme setzt und dann durch das Multiplexing komprimierter und umschlossener Bilddatenströme, aus zahlreichen Bildkomponenten, diese in einen einzigen Ausgangsstrom zusammenfasst, so dass der Inhalt jedes Ausgabe-Puffers an den vorigen angehängt wird.

4. Ein Bildverarbeitungssystem nach Anspruch 1, in dem das besagte Bildverarbeitungssystem des Weiteren eine reversible Farbumwandlungseinheit umfasst, die vor besagter diskreten Wavelet-Transformationseinheit in das System eingeschlossen wird.

5. Ein Bildverarbeitungssystem nach Anspruch 1, in dem das besagte Bildverarbeitungssystem des Weiteren eine Kommunikationssteuerungs-Einheit, die auf Bilddatenströme, die aus zahlreichen Komponenten bestehen und aus zahlreichen Quellen stammen, das Multiplex-Verfahren anwendet und auf zahlreiche Ziele Demultiplexing für komprimierte Bilddatenströme anwendet.

6. Ein Bildverarbeitungssystem nach Anspruch 1 und 5, in dem besagtes Bildverarbeitungssystem auch eine Ablaufsteuerungs-Einheit umfasst, die die Abläufe in besagter diskreten Wavelet-Transformationseinheit, in der lokalen Datenspeicher-Einheit, der Entropiekodierungseinheit und der Kommunikationssteuerungs-Einheit plant, und den Ablauf steuert.

7. Ein Bildverarbeitungssystem nach Anspruch 1, in dem die besagte Datenumordungs-Einheit, die besagte mehrkanalige FIR-Filter-Einheit, die besagte Datenplanungs-Einheit und die besagte Datenschnittstellen-Einheit in einem Field Programmabel Gate Array (FPGA) implementiert werden.

8. Ein Bildverarbeitungssystem nach Anspruch 1, in dem die besagte Datenumordungs-Einheit, die besagte mehrkanalige FIR-Filter-Einheit, die besagte Datenplanungs-Einheit und die besagte Datenschnittstellen-Einheit in einer Anwendungsspezifischen Integrierte Schaltung (ASIC) implementiert werden.

9. Ein Bildverarbeitungssystem nach Anspruch 1, in dem die besagte Datenumordungs-Einheit, die besagte mehrkanalige FIR-Filter-Einheit, die die oben bezeichnete Datenplanungs-Einheit und die besagte Datenschnittstellen-Einheit in einem universalen Digitalen Signalprozessor (DSP) implementiert werden.

10. Ein Bildverarbeitungssystem nach Anspruch 1, in dem die oben genannte lokale Datenzwischenspeicherungs-Einheit in SRAM- und SDRAM-Memory-ICs implementiert wird.

**11.** Ein Bildverarbeitungssystem nach Anspruch 1, in dem die besagte Datenabholungs-Einheit, die oben bezeichnete koeffiziente Bitmodellierungseinheit, die besagte arithmetische Kodierungseinheit und die besagte Datenstromformatierungs-Einheit in einem Field Programmabel Gate Array (FPGA) implementiert werden.

**12.** Ein Bildverarbeitungssystem nach Anspruch 1, in dem die besagte Datenabholungs-Einheit, die besagte koeffiziente Bitmodellierungseinheit, die besagte arithmetische Kodierungseinheit und die besagte Datenstromformatierungs-Einheit in einer Anwendungsspezifischen Integrierte Schaltung (ASIC) implementiert werden.

**13.** Ein Bildverarbeitungssystem nach Anspruch 1, in dem die besagte Datenabholungs-Einheit, die oben bezeichnete koeffiziente Bitmodellierungseinheit, die besagte arithmetische Kodierungseinheit und die genannte Datenstromformatierungs-Einheit in einem universalen Digitalen Signalprozessor (DSP) implementiert werden.

**14.** Ein Bildverarbeitungssystem nach Anspruch 1, in dem die oben bezeichnete lokale Datenspeicher-Einheit in SRAM- und SDRAM-Memory-ICs implementiert wird.

**15.** Ein Bildverarbeitungssystem nach Anspruch 1, in dem die besagte Datenumordnungs-Einheit, die oben genannte mehrkanalige FIR-Filter-Einheit, die besagte Datenplanungs-Einheit, die oben bezeichnete Datenschnittstellen-Einheit, die besagte Datenabholungs-Einheit, die bezeichnete koeffiziente Bitmodellierungseinheit, die besagte arithmetische Kodierungseinheit und die besagte Datenstromformatierungs-Einheit in einem Field Programmabel Gate Array (FPGA) implementiert werden.

**16.** Ein Bildverarbeitungssystem nach Anspruch 1, in dem die oben bezeichnete Datenumordnungs-Einheit, die oben genannte mehrkanalige FIR-Filter-Einheit, die besagte Datenplanungs-Einheit, die bezeichnete Datenschnittstellen-Einheit, die besagte Datenabholungs-Einheit, die besagte koeffiziente Bitmodellierungseinheit, die besagte arithmetische Kodierungseinheit und die besagte Datenstromformatierungs-Einheit in einer Anwendungsspezifischen Integrierte Schaltung (ASIC) implementiert werden.

**17.** Ein Bildverarbeitungssystem nach Anspruch 5, in dem die besagte Kommunikationssteuerungs-Einheit in einem Field Programmabel Gate Array (FPGA) implementiert wird.

**18.** Ein Bildverarbeitungssystem nach Anspruch 5, in dem die besagte Kommunikationssteuerungs-Einheit einer Anwendungsspezifischen Integrierte Schaltung (ASIC) implementiert wird.

**19.** Ein Bildverarbeitungssystem nach Anspruch 6, in dem besagte Ablaufsteuerungseinheit in einem Field Programmabel Gate Array (FPGA) implementiert wird.

**20.** Ein Bildverarbeitungssystem nach Anspruch 6, in dem besagte Ablaufsteuerungseinheit in einer Anwendungsspezifischen Integrierte Schaltung (ASIC) implementiert wird.

**Revendications**

**1.** Un système de traitement d'images pour la compression en temps réel d'images individuelles ou à multiples composants et optimisant le standard de compression d'images JPEG2000 en vue d'un temps minimum de traitement, d'exigences de stockage minimales, et d'une architecture scalaire comprenant :

une unité de transformée en ondelettes discrètes comprenant :

a. une unité de filtre FIR multi canaux réalisant une transformée en ondelettes discrètes sur des donnés d'images découpées en forme de tuiles et consistant en la séparation de filtres en cascade par chaque niveau de décomposition en sous-bandes, chacun d'eux employant une extension symétrique sur les limites des images tuilées ;
b. une unité de réarrangement de données, recevant des images individuelles ou à multiples composants disposées en rangées et de manière consécutive tout en les réarrangeant en images tuilées.
c. Une unité locale de données de mise en mémoire tampon, qui stocke temporairement une partie des entrées de données d'images disposées en rangées ;
d. Une unité de planification de données réarrangeant les coefficients d'ondelettes calculés par la dite unité de filtre FIR multi canaux ;

e. Une unité d'interface de données de flux sortant des coefficients d'ondelettes ;

Une unité locale de stockage de données qui stocke temporairement les coefficients d'ondelettes de flux sortant par la dite unité d'interface de données ;
Une unité de codage entropique comprenant :

a. Une unité de récupération de données lisant les coefficients d'ondelettes stockés depuis la dite unité locale de stockage de données et les réarrangeant en blocs de codes ;
b. Une unité de coefficient de modélisation de bits calculant les données contextuelles des blocs de code entrants ;
c. Une unité d'encodage arithmétique qui crée un flux de données d'images comprimées ;
d. Une unité de mise en forme de flux de données isolant des parties de flux de données d'images avec un système d'identification et des marqueurs mesurant la qualité, préalablement au stockage ;

- les dits filtres en cascade, lesquels constituent la dite unité de filtre FIR, réalisant des extensions symétriques sur les dites limites des images tuilées à chaque niveau de décomposition en sous-bandes, au moyen d'une unité de contrôle d'état étendant chaque entrée de ligne d'image aux deux extrémités en produisant des réflexions de la dite ligne autour du premier et dernier échantillon et diffusant la version étendue de chaque ligne d'image aux éléments de retard des dits filtres de façon à maintenir l'interface de débit pour garder un flux entrant de données en images tuilées consécutives, et un flux sortant de données d'images découpées en tuiles sans aucun intervalle d'attente aux dites limites d'images tuilées ;
- la dite unité de réarrangement de données lisant les données stockées d'images disposées en rangées depuis l'unité de données de mise en mémoire tampon et les réarrangeant en petites images tuilées, aussitôt qu'une quantité suffisante pour construire une image tuilée est accumulée en la dite unité locale de données de mise en mémoire tampon.
- la dite unité de planification de données mettant en mémoire tampon et réarrangeant les flux sortants des dits coefficients d'ondelettes en courtes rafales de paquets depuis les dits filtres en cascade, qui constituent l'unité des dits filtres FIR multi canaux, de façon à réduire la largeur de bande nécessaire de l'interface de sortie de la dite unité de transformée d'ondelettes discrètes ;
- le dit système de traitement d'image **caractérisé en ce que**

la dite unité de mise en forme de flux de données des parties de flux de données d'images comprimées sont isolées avec les dits marqueurs d'identification de façon à signaler le début de chaque nouveau composant, quadrant, sous-bande, tuile et bloc de code au dit flux de données d'images comprimées, et avec les dits marqueurs de mesure de qualité pour contrôler la dimension et la qualité de l'image comprimée en indiquant la compression et les paramètres de dynamique pour la valeur de quantification appliquée aux coefficients d'ondelettes et l'information sur les sous-bandes exclues ou tuiles des dits flux de données comprimés.

2. Un système de traitement d'image selon la revendication 1, est **caractérisé en ce que**;
la dite unité locale de stockage de données stockant seulement une partie des coefficients d'ondelettes en flux de données sortant par la dite unité d'interface de données ;
aussitôt qu'une quantité de coefficients d'ondelettes suffisante pour construire un bloc de code est accumulée, la dite unité de récupération de données lit les coefficients d'ondelette stockés depuis l'unité locale de stockage de données en blocs de code ;
un flot de données uniforme étant assuré par une opération concurrente de la dite unité d'interface de données et de la dite unité de récupération de données.

3. Un système de traitement d'images selon la revendication 1, est **caractérisé en ce que**;
la dite unité individuelle de coefficient de modélisation de bits réalisant en temps réel une évaluation de mesure de qualité sur chacun des multiples composants d'images de façon indépendante ;
la dite unité d'encodage arithmétique traitant multiples composants d'images en parallèle au moyen de multiples registres de contexte et de multiples sorties de mémoire tampon pour le stockage séparé des flux de données d'images comprimées ;
la dite unité de mise en forme de flux de données comprenant les dits marqueurs pour le début des dits flux de données d'images comprimées et ainsi donc multiplexant des flux de données d'images comprimées et isolées des multiples composants d'images, en un seul flux de données d'entrée de telle manière que chaque entrée de mémoire tampon soit reliée au précédent flux de sortie de données.

**4.** Un système de traitement d'images selon la revendication 1, où le dit traitement d'image comprend plus en avant une unité de transformée couleur réversible qui est incluse au système préalablement à la dite unité de transformée en ondelettes discrètes.

**5.** Un système de traitement d'images selon la revendication 1, où le dit système de traitement d'image comprend aussi une unité de contrôle de communication multiplexant les multiples composants des flux de données d'images à partir de multiples sources et démultiplexant les multiples destinations des flux de données d'images comprimées.

**6.** Un système de traitement d'images selon les revendications 1 et 5 où le dit système de traitement d'image comprend aussi une unité de contrôle d'opérations planifiant et séquençant les opérations de la dite unité de transformée en ondelettes discrètes, de l'unité locale de stockage de données, de l'unité de codage entropique, et de l'unité de contrôle de communication.

**7.** Un système de traitement d'images selon la revendication 1, où la dite unité de réarrangement de données, la dite unité de filtre FIR multi canaux, la dite unité de planification de données et la dite unité d'interface de données sont exécutées par un réseau de portes programmables (FPGA, Field Programmable Gate Array).

**8.** un système de traitement d'images selon la revendication 1, où la dite unité de réarrangement de données, la dite unité de filtre FIR multi canaux, la dite unité de planification de données et la dite unité d'interface de données sont exécutées par un circuit intégré pour applications spécifiques. (ASIC, Application Specific Integrated Circuit).

**9.** Un système de traitement d'images selon la revendication 1, où la dite unité de réarrangement de données, la dite unité de filtre FIR multi canaux, la dite unité de planification de données et la dite unité d'interface de données sont exécutées par un processeur de signaux numériques banalisé. (DSP, Digital Signal Processing).

**10.** Un système de traitement d'images selon la revendication 1, où la dite unité locale de mise en mémoire tampon de données est exécutée en mémoire partagée (SRAM, Shared Random Acess Memory) ou en mémoire synchronisée (SDRAM, Synchronous Dynamic Random Access Memory) de la mémoire ICs.

**11.** Un système de traitement d'images selon la revendication 1, où la dite unité de récupération de données, la dite unité de coefficient de modélisation de bits, la dite unité de codage arithmétique et la dite unité de mise en forme de flux de données sont exécutées par un réseau de portes programmables (FPGA, Field Programmable Gate Array).

**12.** Un système de traitement d'images selon la revendication 1, où la dite unité de récupération de données, la dite unité de coefficient de modélisation de bits, la dite unité de codage arithmétique et la dite unité de mise en forme de flux de données sont exécutées par un circuit intégré pour applications spécifiques. (ASIC, Application Specific Integrated Circuit).

**13.** Un système de traitement d'images selon la revendication 1, où la dite unité de récupération de données, la dite unité de coefficient de modélisation de bits, la dite unité de codage arithmétique et la dite unité de mise en forme de flux de données sont exécutées par un processeur de signaux numériques banalisé. (DSP, Digital Signal Processing).

**14.** Un système de traitement d'images selon la revendication 1, où l'unité locale de stockage de données est exécutée par la mémoire partagée (SRAM, Shared Random Access Memory) ou la mémoire synchronisée (SDRAM, Synchronous Dynamic Random Access Memory) de la mémoire ICs.

**15.** Un système de traitement d'images selon la revendication 1, où la dite unité de réarrangement de données, la dite unité de filtre FIR multi canaux, la dite unité de planification de données et la dite unité d'interface de données, la dite unité de récupération de données, la dite unité de coefficient de modélisation de bits, la dite unité de codage arithmétique et la dite unité de mise en forme de flux de données sont exécutées par un réseau de portes programmables (FPGA, Field Programmable Gate Array).

**16.** Un système de traitement d'images selon la revendication 1, où la dite unité de réarrangement de données, la dite unité de filtre FIR multi canaux, la dite unité de planification de données et la dite unité d'interface de données, la dite unité de récupération de données, la dite unité de coefficient de modélisation de bits, la dite unité de codage arithmétique et la dite unité de mise en forme de flux de données sont exécutées par un circuit intégré pour applications spécifiques. (ASIC, Application Specific Integrated Circuit).

17. Un système de traitement d'images selon la revendication 5, où l'unité de contrôle de communication est exécutée par un réseau de portes programmables (FPGA, Field Programmable Gate Array).

18. Un système de traitement d'images selon la revendication 5, où l'unité de contrôle de communication est exécutée par un circuit intégré pour applications spécifiques. (ASIC, Application Specific Integrated Circuit).

19. Un système de traitement d'images selon la revendication 6, où la dite unité de contrôle d'opération est exécutée par un réseau de portes programmables (FPGA, Field Programmable Gate Array).

20. Un système de traitement d'images selon la revendication 6, où la dite unité de contrôle d'opération est exécutée par un circuit intégré pour applications spécifiques. (ASIC, Application Specific Integrated Circuit).

FIG 1.

**FIG. 2**

**FIG 3.**

**FIG 4.**

Original Image $T_i(x,y)$

$L_i$    $H_i$

$LL^1_i$    $LH^1_i$    $HL^1_i$    $HH^1_i$

$(LL)^1L_i$    $(LL)^1H_i$

$LL^2_i$    $LH^2_i$    $HL^2_i$    $HH^2_i$

to    next

iteration

Vertical Direction    Horizontal Direction

Vertical Direction    Horizontal Direction

$H_0$: Low-pass
$H_1$: High-pass

$HL^2_i$    $HL^1_i$

$LH^2_i$    $HH^2_i$

$LH^1_i$    $HH^1_i$

**FIG 5.**

**FIG 6.**

**FIG 7.**

$DE_0$ $DE_2$

| $X$ | $X$ | | $UB$ |
| | $X$ | $F_{odd}(X,X,X,X)$ |

$R_0$

$DE_1$

| $R_0$ | $X$ |
| | $X$ | $F_{odd}(X,X,X,X)$ |

$R_1$

| $R_0$ | $X$ |
| | $R_1$* | $F_{odd}(X,X,X,X)$ |

$R_2$

| $R_0$ | $R_2$* |
| | $R_1$ | $F_{odd}(R_2,R_0,X,R_1)$* |

V $R_3$

| $R_2$* | $R_0$* |
| | $R_3$* | $F_{odd}(R_0,R_2,U,R_1)$* |

$R_4$

| $R_4$* | $R_2$* |
| | $R_3$ | $F_{odd}(R_0,R_2,U,R_1)$ |

V $R_5$

| $R_4$ | $R_2$ |
| | $R_5$ | $F_{odd}(R_2,R_4,U,R_3)$ |

$R_6$

| $R_6$* | $R_4$* |
| | $R_5$ | $F_{odd}(R_2,R_4,U,R_3)$ |

V $R_7$

| $R_6$ | $R_4$ |
| | $R_7$* | $F_{odd}(R_4,R_6,U,R_5)$* |

V No 1

| $R_6$* | $R_6$* |
| | $R_7$ | $F_{odd}(R_6,R_6,U,R_7)$* |

## FIG 8.

Delay Element 0 — Delay Element 2

Input — Control and Mux Unit — Computation Kernel — Output

Delay Element 1 — Update Buffer

## FIG 9.

FIG 10.

FIG 11.

FIG 12.

EP 1 652 146 B1

FIG 13.

FIG 14.

26

```
          ┌─────────────────────────────────────────┐
          │        TMS320C67X DSP JPEG2K             │
          └─────────────────────────────────────────┘
                              │
                              ▼
          ┌─────────────────────────────────────────┐
          │          Initialize Channel Index        │
          │                COLOR = 0                  │
          │   (0 for first two bands, 1 for last two bands) │
          │           SETTING = *SETTING WORD         │
          └─────────────────────────────────────────┘
                              │
                              ▼
          ┌─────────────────────────────────────────┐
          │     BUFFER 1 MARKER = BAND 0             │
          │     BUFFER 2 MARKER = BAND 1             │
          └─────────────────────────────────────────┘
                              │
                              ▼
          ┌─────────────────────────────────────────┐
    ┌────▶│          INITIALIZE BUFFERS              │
    │     └─────────────────────────────────────────┘
    │                         │
    │                         ▼
    │     ┌─────────────────────────────────────────┐
    │     │        CODE NEW STREAM MARKER           │
    │     └─────────────────────────────────────────┘
    │                         │
    │                         ▼
    │     ┌─────────────────────────────────────────┐
    │     │   CODE COMPRESSION SETTING ( SETTING )   │
    │     └─────────────────────────────────────────┘
    │                         │
    │                         ▼
    │     ┌─────────────────────────────────────────┐
    │     │        CODE NEW CHANNEL MARKER          │
    │     └─────────────────────────────────────────┘
    │                         │
    │                         ▼
    │     ┌─────────────────────────────────────────┐
    │     │    CODE CHANNEL ( COLOR, SETTING )       │
    │     └─────────────────────────────────────────┘
    │                         │
    │                         ▼
    │     ┌─────────────────────────────────────────┐
    │     │                COLOR ++                  │
    │     └─────────────────────────────────────────┘
    │                         │
    │                         ▼
    │     ┌─────────────────────────────────────────┐
    │     │      CODE END OF STREAM MARKER          │
    │     └─────────────────────────────────────────┘
    │                         │
    │                         ▼
    │     ┌─────────────────────────────────────────┐
    │     │              DUMP BUFFERS                │
    │     └─────────────────────────────────────────┘
    │                         │
    │                         ▼
    │     ┌─────────────────────────────────────────┐
    │     │     BUFFER 1 MARKER = BAND 2             │
    │     │     BUFFER 2 MARKER = BAND 3             │
    │     └─────────────────────────────────────────┘
    │                         │
    │     YES                 ▼
    └──────────────◇  IF COLOR < 2  ◇
                              │
                              │ NO
                              ▼
          ┌─────────────────────────────────────────┐
          │                 DONE                     │
          └─────────────────────────────────────────┘
```

**FIG 15.**

INITIALIZE BUFFERS

↓

BUFFER 1 POINTER = BUFFER 1 MEMORY
BUFFER 2 POINTER = BUFFER 2 MEMORY
BUFFER1 COUNTER = 0
BUFFER2 COUNTER = 0

↓

*BUFFER 1 POINTER = BUFFER1 MARKER
*BUFFER 2 POINTER = BUFFER2 MARKER
BUFFER 1 COUNTER ++
BUFFER 2 COUNTER ++
BUFFER 1 POINTER ++
BUFFER 2 POINTER ++

↓

DONE

DUMP BUFFERS

↓

transmit encoded stream in buffer 1
(start address : BUFFER 1 MEMORY)
transmit encoded stream in buffer 2
(start address : BUFFER 2 MEMORY)

↓

DONE

CODE COMPRESSION SETTING ( SETTING )

↓

*BUFFER 1 POINTER = SETTING
*BUFFER 2 POINTER = SETTING
BUFFER1 COUNTER ++
BUFFER2 COUNTER ++
BUFFER1 POINTER ++
BUFFER2 POINTER ++

↓

CHECK BUFFERS

↓

DONE

**FIG 16.**

```
┌─────────────────────────────────────────┐
│         CODE NEW STREAM MARKER           │
└─────────────────────────────────────────┘
                    │
                    ▼
┌─────────────────────────────────────────┐
│   *BUFFER 1 POINTER = NEW STREAM         │
│   *BUFFER 2 POINTER = NEW STREAM         │
│        BUFFER 1 COUNTER ++               │
│        BUFFER 2 COUNTER ++               │
│        BUFFER 1 POINTER ++               │
│        BUFFER 2 POINTER ++               │
└─────────────────────────────────────────┘
                    │
                    ▼
┌─────────────────────────────────────────┐
│              CHECK BUFFERS               │
└─────────────────────────────────────────┘
                    │
                    ▼
┌─────────────────────────────────────────┐
│                 DONE                     │
└─────────────────────────────────────────┘


┌─────────────────────────────────────────┐
│        CODE END OF STREAM MARKER         │
└─────────────────────────────────────────┘
                    │
                    ▼
┌─────────────────────────────────────────┐
│   *BUFFER 1 POINTER = END OF STREAM      │
│   *BUFFER 2 POINTER = END OF STREAM      │
│        BUFFER 1 COUNTER ++               │
│        BUFFER 2 COUNTER ++               │
│        BUFFER 1 POINTER ++               │
│        BUFFER 2 POINTER ++               │
└─────────────────────────────────────────┘
                    │
                    ▼
┌─────────────────────────────────────────┐
│              CHECK BUFFERS               │
└─────────────────────────────────────────┘
                    │
                    ▼
┌─────────────────────────────────────────┐
│                 DONE                     │
└─────────────────────────────────────────┘


┌─────────────────────────────────────────┐
│        CODE NEW CHANNEL MARKER           │
└─────────────────────────────────────────┘
                    │
                    ▼
┌─────────────────────────────────────────┐
│   *BUFFER 1 POINTER = NEW CHANNEL        │
│   *BUFFER 2 POINTER = NEW CHANNEL        │
│        BUFFER 1 COUNTER ++               │
│        BUFFER 2 COUNTER ++               │
│        BUFFER 1 POINTER ++               │
│        BUFFER 2 POINTER ++               │
└─────────────────────────────────────────┘
                    │
                    ▼
┌─────────────────────────────────────────┐
│              CHECK BUFFERS               │
└─────────────────────────────────────────┘
                    │
                    ▼
┌─────────────────────────────────────────┐
│                 DONE                     │
└─────────────────────────────────────────┘
```

**FIG 17.**

```
┌─────────────────────────────────────────┐
│       CODE NEW QUADRANT MARKER          │
└─────────────────────────────────────────┘
                    │
                    ▼
┌─────────────────────────────────────────┐
│  *BUFFER 1 POINTER = NEW QUADRANT       │
│  *BUFFER 2 POINTER = NEW QUADRANT       │
│       BUFFER 1 COUNTER ++               │
│       BUFFER 2 COUNTER ++               │
│       BUFFER 1 POINTER ++               │
│       BUFFER 2 POINTER ++               │
└─────────────────────────────────────────┘
                    │
                    ▼
┌─────────────────────────────────────────┐
│            CHECK BUFFERS                │
└─────────────────────────────────────────┘
                    │
                    ▼
┌─────────────────────────────────────────┐
│               DONE                      │
└─────────────────────────────────────────┘


┌─────────────────────────────────────────┐
│          CODE NEW TILE MARKER           │
└─────────────────────────────────────────┘
                    │
                    ▼
┌─────────────────────────────────────────┐
│   *BUFFER 1 POINTER = NEW TILE          │
│   *BUFFER 2 POINTER = NEW TILE          │
│       BUFFER 1 COUNTER ++               │
│       BUFFER 2 COUNTER ++               │
│       BUFFER 1 POINTER ++               │
│       BUFFER 2 POINTER ++               │
└─────────────────────────────────────────┘
                    │
                    ▼
┌─────────────────────────────────────────┐
│            CHECK BUFFERS                │
└─────────────────────────────────────────┘
                    │
                    ▼
┌─────────────────────────────────────────┐
│               DONE                      │
└─────────────────────────────────────────┘


┌─────────────────────────────────────────┐
│          CODE NO TILE MARKER            │
└─────────────────────────────────────────┘
                    │
                    ▼
┌─────────────────────────────────────────┐
│   *BUFFER 1 POINTER = NO TILE           │
│   *BUFFER 2 POINTER = NO TILE           │
│       BUFFER 1 COUNTER ++               │
│       BUFFER 2 COUNTER ++               │
│       BUFFER 1 POINTER ++               │
│       BUFFER 2 POINTER ++               │
└─────────────────────────────────────────┘
                    │
                    ▼
┌─────────────────────────────────────────┐
│            CHECK BUFFERS                │
└─────────────────────────────────────────┘
                    │
                    ▼
┌─────────────────────────────────────────┐
│               DONE                      │
└─────────────────────────────────────────┘
```

**FIG 18.**

```
┌─────────────────────────────────────┐
│       CODE NEW SUBBAND MARKER        │
└─────────────────────────────────────┘
                   │
                   ▼
┌─────────────────────────────────────┐
│  *BUFFER 1 POINTER = NEW SUBBAND     │
│  *BUFFER 2 POINTER = NEW SUBBAND     │
│      BUFFER 1 COUNTER ++             │
│      BUFFER 2 COUNTER ++             │
│      BUFFER 1 POINTER ++             │
│      BUFFER 2 POINTER ++             │
└─────────────────────────────────────┘
                   │
                   ▼
┌─────────────────────────────────────┐
│           CHECK BUFFERS              │
└─────────────────────────────────────┘
                   │
                   ▼
┌─────────────────────────────────────┐
│              DONE                    │
└─────────────────────────────────────┘


┌─────────────────────────────────────┐
│       CODE NO SUBBAND MARKER         │
└─────────────────────────────────────┘
                   │
                   ▼
┌─────────────────────────────────────┐
│  *BUFFER 1 POINTER = NO SUBBAND      │
│  *BUFFER 2 POINTER = NO SUBBAND      │
│      BUFFER 1 COUNTER ++             │
│      BUFFER 2 COUNTER ++             │
│      BUFFER 1 POINTER ++             │
│      BUFFER 2 POINTER ++             │
└─────────────────────────────────────┘
                   │
                   ▼
┌─────────────────────────────────────┐
│           CHECK BUFFERS              │
└─────────────────────────────────────┘
                   │
                   ▼
┌─────────────────────────────────────┐
│              DONE                    │
└─────────────────────────────────────┘
```

**FIG 19.**

CODE NEW CODEBLOCK MARKER IN
BUFFER 1 ( $M_I$ )

*BUFFER 1 POINTER = NEW CODEBLOCK
BUFFER 1 COUNTER ++
BUFFER 1 POINTER ++

CHECK BUFFERS

*BUFFER 1 POINTER = $M_I$
BUFFER 1 COUNTER ++
BUFFER 1 POINTER ++

CHECK BUFFERS

DONE

CODE NO CODEBLOCK MARKER IN
BUFFER 1

*BUFFER 1 POINTER = NO CODEBLOCK
BUFFER 1 COUNTER ++
BUFFER 1 POINTER ++

CHECK BUFFERS

DONE

**FIG 20.**

```
┌─────────────────────────────────────┐
│   CODE NEW CODEBLOCK MARKER IN       │
│         BUFFER 2 ( M₂ )              │
└─────────────────────────────────────┘
                  │
                  ▼
┌─────────────────────────────────────┐
│                                      │
│  *BUFFER 2 POINTER = NEW CODEBLOCK   │
│       BUFFER 2 COUNTER ++            │
│       BUFFER 2 POINTER ++            │
│                                      │
└─────────────────────────────────────┘
                  │
                  ▼
┌─────────────────────────────────────┐
│          CHECK BUFFERS               │
└─────────────────────────────────────┘
                  │
                  ▼
┌─────────────────────────────────────┐
│                                      │
│      *BUFFER 2 POINTER = M₂          │
│       BUFFER 2 COUNTER ++            │
│       BUFFER 2 POINTER ++            │
│                                      │
└─────────────────────────────────────┘
                  │
                  ▼
┌─────────────────────────────────────┐
│          CHECK BUFFERS               │
└─────────────────────────────────────┘
                  │
                  ▼
┌─────────────────────────────────────┐
│              DONE                    │
└─────────────────────────────────────┘

┌─────────────────────────────────────┐
│   CODE NO CODEBLOCK MARKER IN        │
│           BUFFER 2                   │
└─────────────────────────────────────┘
                  │
                  ▼
┌─────────────────────────────────────┐
│                                      │
│  *BUFFER 2 POINTER = NO CODEBLOCK    │
│       BUFFER 2 COUNTER ++            │
│       BUFFER 2 POINTER ++            │
│                                      │
└─────────────────────────────────────┘
                  │
                  ▼
┌─────────────────────────────────────┐
│          CHECK BUFFERS               │
└─────────────────────────────────────┘
                  │
                  ▼
┌─────────────────────────────────────┐
│              DONE                    │
└─────────────────────────────────────┘
```

**FIG 21.**

```
CHECK BUFFERS

IF BUFFER 1 COUNTER          NO
== BUFFER WIDTH

          YES

DUMP BUFFERS


IF BUFFER 2 COUNTER          NO
== BUFFER WIDTH

          YES

DUMP BUFFERS


DONE
```

**FIG 22.**

CODE CHANNEL ( *COLOR, SETTING* )

Initialize Quadrant Index
$QUADRANT = 0$

CODE NEW QUADRANT MARKER

CODE QUADRANT ( *COLOR, SETTING, QUADRANT* )

$QUADRANT ++$

YES ← IF $QUADRANT < 4$

NO

DONE

**FIG 23.**

CODE QUADRANT ( *COLOR, SETTING, QUADRANT* )

Initialize Tile Index
*TILE* = 0

IF *SETTING.TILE*

NO

YES

CODE NEW TILE MARKER

CODE NO TILE MARKER

CODE TILE ( *COLOR, SETTING, QUADRANT, TILE* )

*TILE* ++

YES

IF
*TILE* < NUMBER OF TILES

NO

DONE

**FIG 24.**

```
┌─────────────────────────────────┐
│ CODE TILE ( COLOR, SETTING, QUADRANT, │
│            TILE )               │
└─────────────────────────────────┘
              │
              ▼
┌─────────────────────────────────┐
│   Initialize Level Index        │
│        LEVEL = 2                │
│                                 │
│   Initialize Subband Index      │
│      SUBBAND = LL               │
└─────────────────────────────────┘
              │
              ▼
┌─────────────────────────────────┐
│   CODE NEW SUBBAND MARKER       │
└─────────────────────────────────┘
              │
              ▼
┌─────────────────────────────────┐
│  CODE SUBBAND ( COLOR, SETTING, │
│  QUADRANT, TILE, LEVEL, SUBBAND )│
└─────────────────────────────────┘
              │
              ▼
┌─────────────────────────────────┐
│       SUBBAND = LH              │
└─────────────────────────────────┘
              │
              ▼
         IF SETTING.LEVEL.SUBBAND ────NO──┐
              │                           │
             YES                          │
              ▼                           ▼
┌──────────────────────────┐   ┌──────────────────────────┐
│ CODE NEW SUBBAND MARKER   │   │  CODE NO SUBBAND MARKER   │
└──────────────────────────┘   └──────────────────────────┘
              │                           │
              ▼                           │
┌──────────────────────────┐             │
│ CODE SUBBAND ( COLOR, SETTING,          │
│ QUADRANT, TILE, LEVEL, SUBBAND )        │
└──────────────────────────┘             │
              │◄────────────────────────┘
              ▼
┌─────────────────────────────────┐
│       SUBBAND = HL              │
└─────────────────────────────────┘
              │
              ▼
         IF SETTING.LEVEL.SUBBAND ────NO──┐
              │                           │
             YES                          │
              ▼                           ▼
┌──────────────────────────┐   ┌──────────────────────────┐
│ CODE NEW SUBBAND MARKER   │   │  CODE NO SUBBAND MARKER   │
└──────────────────────────┘   └──────────────────────────┘
              │                           │
              ▼                           │
┌──────────────────────────┐             │
│ CODE SUBBAND ( COLOR, SETTING,          │
│ QUADRANT, TILE, LEVEL, SUBBAND )        │
└──────────────────────────┘             │
              │◄────────────────────────┘
              ▼
┌─────────────────────────────────┐
│       SUBBAND = HH              │
└─────────────────────────────────┘
              │
              ▼
```

**FIG. 25**

37

IF *SETTING.LEVEL.SUBBAND* — NO

YES

| CODE NEW SUBBAND MARKER | CODE NO SUBBAND MARKER |

CODE SUBBAND ( *COLOR, SETTING, QUADRANT, TILE, LEVEL, SUBBAND* )

*LEVEL = 1*
*SUBBAND =* **LH**

IF *SETTING.LEVEL.SUBBAND* — NO

YES

| CODE NEW SUBBAND MARKER | CODE NO SUBBAND MARKER |

CODE SUBBAND ( *COLOR, SETTING, QUADRANT, TILE, LEVEL, SUBBAND* )

*SUBBAND =* **HL**

IF *SETTING.LEVEL.SUBBAND* — NO

YES

| CODE NEW SUBBAND MARKER | CODE NO SUBBAND MARKER |

CODE SUBBAND ( *COLOR, SETTING, QUADRANT, TILE, LEVEL, SUBBAND* )

*SUBBAND =* **HH**

**FIG. 25 (continued)**

**FIG. 25 (continued)**

```
                    ┌─────────────────────────────┐
                    │  IF SETTING.LEVEL.SUBBAND    │── NO ──┐
                    └─────────────────────────────┘        │
                            │ YES                           │
        ┌───────────────────────────────┐    ┌──────────────────────────────┐
        │  CODE NEW SUBBAND MARKER       │    │  CODE NO SUBBAND MARKER      │
        └───────────────────────────────┘    └──────────────────────────────┘
                            │                          │
        ┌───────────────────────────────┐             │
        │  CODE SUBBAND ( COLOR, SETTING,│             │
        │  QUADRANT, TILE, LEVEL, SUBBAND)│            │
        └───────────────────────────────┘             │
                            │◄────────────────────────┘
        ╭───────────────────────────────╮
        │            DONE                │
        ╰───────────────────────────────╯
```

**FIG. 25 (continued)**

CODE SUBBAND ( *COLOR, SETTING, QUADRANT, TILE, LEVEL, SUBBAND* )

FETCH SUBBAND DATA ( *COLOR, QUADRANT, TILE, LEVEL, SUBBAND, SETTING* )

*SUBBAND WIDTH* = TILE WIDTH >> *( LEVEL + 1 )*
*SUBBAND HEIGHT* = TILE HEIGHT >> *( LEVEL + 1 )*
*SUBBAND POINTER* = MEMORY SUBBAND AREA
*CODEBLOCK WIDTH INDEX* = 0
*CODEBLOCK HEIGHT INDEX* = 0
*CODEBLOCK POINTER* = 0

*CODEBLOCK POINTER = SUBBAND POINTER + ( CODEBLOCK HEIGHT INDEX x SUBBAND HEIGHT ) + CODEBLOCK WIDTH INDEX*

GET CODEBLOCK ( *CODEBLOCK POINTER,, SUBBAND WIDTH* )

CODE CODEBLOCK

*CODEBLOCK WIDTH INDEX* += CODEBLOCK WIDTH

IF *CODEBLOCK WIDTH INDEX < SUBBAND WIDTH*

YES

NO

*CODEBLOCK WIDTH INDEX* = 0
*CODEBLOCK HEIGHT INDEX* += CODEBLOCK HEIGHT

IF *CODEBLOCK HEIGHT INDEX < SUBBAND HEIGHT*

YES

NO

DONE

**FIG 26.**

EP 1 652 146 B1

FETCH SUBBAND DATA ( *COLOR, QUADRANT, TILE, LEVEL, SUBBAND, SETTING* )

get and store subband data for *SUBBAND* of *LEVEL* of *TILE* of *QUADRANT* of channels *COLOR* from **INPUT DATA AREA** in **MEMORY SUBBAND AREA**
(stored data consists of wavelet coefficients of the two channels (*COLOR*) of image at same quadrant, tile, level and subband)

**IF** *SETTING.LEVEL.SUBBAND.EXTRA QUANTIZATION*

NO

YES

Right shift fetched subband data in **MEMORY SUBBAND AREA** by *SETTING.LEVEL.SUBBAND.EXTRA QUANTIZATION VALUE*

DONE

**FIG 27.**

42

GET CODEBLOCK ( *CODEBLOCK POINTER,,*
*SUBBAND WIDTH* )

get and store codeblock data of **CODEBLOCK WIDTH** x **CODEBLOCK HEIGHT** from *CODEBLOCK POINTER* to **MEMORY CODEBLOCK AREA** using *SUBBAND WIDTH* knowledge.
(stored codeblock data consists of wavelet coefficients of the two channels)

clear codeblock context data in **MEMORY CONTEXT AREA**
initialize codeblock context data in **MEMORY CONTEXT AREA** using codeblock data in **MEMORY CODEBLOCK AREA**
(context data consists of context information of the two channels)

DONE

**FIG 28.**

CODE CODEBLOCK

calculate dynamic Range $M_1$ for codeblock of first channel in MEMORY CODEBLOCK AREA (JPEG 2000 Standard)

calculate dynamic range $M_2$ for codeblock of second channel in MEMORY CODEBLOCK AREA (JPEG 2000 Standard)

IF $M_1 == 0$ — YES

NO

CODE NEW CODEBLOCK MARKER IN BUFFER 1 ($M_1$)

CODE NO CODEBLOCK MARKER IN BUFFER 1

IF $M_2 == 0$ — YES

NO

CODE NEW CODEBLOCK MARKER IN BUFFER 2 ($M_2$)

CODE NO CODEBLOCK MARKER IN BUFFER 2

$M$ = maximum of ($M_1$, $M_2$)

RESET MQ CODER

CLEANUP PASS ($M_1$, $M_2$)

IF $M_1 = 0$ $M_1 = 1$
$M_1$ --
IF $M_2 = 0$ $M_2 = 1$
$M_2$ --

**FIG 29.**

44

$M$ --

SIGNIFICANCE PASS ( $M_1$, $M_2$ )

MAGNITUDE REFINEMENT PASS ( $M_1$, $M_2$ )

CLEANUP PASS ( $M_1$, $M_2$ )

IF $M_1 = 0$ $M_1 = 1$
$M_1$ --
IF $M_2 = 0$ $M_2 = 1$
$M_2$ --

NO

IF $M = 0$

YES

TERMINATE MQ CODER

DONE

**FIG 29. (continued)**

```
┌─────────────────────────────────────┐
│           RESET MQ CODER             │
└─────────────────────────────────────┘
                  │
                  ▼
┌─────────────────────────────────────┐
│ initialize first MQ coder for first  │
│    band ( JPEG 2000 Standard )       │
└─────────────────────────────────────┘
                  │
                  ▼
┌─────────────────────────────────────┐
│ initialize second MQ coder variables │
│ for second band ( JPEG 2000 Standard)│
└─────────────────────────────────────┘
                  │
                  ▼
┌─────────────────────────────────────┐
│                DONE                  │
└─────────────────────────────────────┘
```

```
┌─────────────────────────────────────┐
│         TERMINATE MQ CODER           │
└─────────────────────────────────────┘
                  │
                  ▼
┌─────────────────────────────────────┐
│ terminate first MQ coder for first   │
│    band ( JPEG2000 Standard )        │
└─────────────────────────────────────┘
                  │
                  ▼
┌─────────────────────────────────────┐
│ terminate second MQ coder variables  │
│ for second band ( JPEG2000 Standard )│
└─────────────────────────────────────┘
                  │
                  ▼
┌─────────────────────────────────────┐
│                DONE                  │
└─────────────────────────────────────┘
```

**FIG 30.**

**FIG 31.**

CLEANUP PASS ( $M_1$, $M_2$ )

Cleanup Pass using $M_1$ for first channel
(JPEG 2000 Standard)

Cleanup Pass using $M_2$ for second channel
(JPEG 2000 Standard)

DONE

SIGNIFICANCE PASS ( $M_1$, $M_2$ )

Significance Pass using $M_1$ for first channel
(JPEG 2000 Standard)

Significance Pass using $M_2$ for second channel
(JPEG 2000 Standard)

DONE

MAGNITUDE REFINEMENT PASS ( $M_1$, $M_2$ )

Magnitude Refinement Pass using $M_1$ for first channel
(JPEG 2000 Standard)

Magnitude Refinement Pass using $M_2$ for second channel
(JPEG 2000 Standard)

DONE

BUFFER 1 MEMORY

BUFFER WIDTH x
Word Length

BUFFER 2 MEMORY

BUFFER WIDTH x
Word Length

BUFFER MEMORY

SETTING WORD

Word Length

COMPRESSION SETTING IN MEMORY

INPUT DATA AREA

NUMBER OF CHANNELS x
IMAGE WIDTH x
IMAGE HEIGHT x
Size of Wavelet Coefficients in Bytes

MEMORY SUBBAND AREA

2 x
MAX SUBBAND WIDTH x
MAX SUBBAND HEIGH x
Size of Wavelet Coefficients in Bytes

MEMORY CODEBLOCK AREA

2 x
CODEBLOCK WIDTH x
CODEBLOCK HEIGHT x
Size of Wavelet Coefficients in Bytes

MEMORY CONTEXT AREA

4 x
CODEBLOCK WIDTH x
CODEBLOCK HEIGHT x
Size of Wavelet Coefficients in Bytes

INTERNAL PROCESSING MEMORY

# FIG 32.

NEW STREAM

*Compression Settings Q*

NEW CHANNEL

NEW QUADRANT

    NEW TILE / NO TILE

        NEW SUBBAND / NO SUBBAND

            NEW CODEBLOCK / NO CODEBLOCK

                *Dynamic Range M*

                *Codeblock compressed stream*

            NEW CODEBLOCK / NO CODEBLOCK

                ....

                ....

                ....

                ....

        NEW SUBBAND / NO SUBBAND

            NEW CODEBLOCK / NO CODEBLOCK

                ....

                ....

                ....

NEW QUADRANT

....

....

....

END OF STREAM

**FIG. 33**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SKODRAS et al.** The JPEG 2000 still image compression standard. *IEEE Signal Processing Magazine,* September 2001

- **DAVID S. TAUBMAN ; MICHEAL W. MARCELLIN.** Jpeg2000: Image Compression Fundamentals, Standards, and Practice. *Kluwer International Series in Engineering and Computer Science,* November 2001, vol. 642